# EUROPEAN PATENT SPECIFICATION

(11) **EP 4 032 957 B1**
(45) Date of publication and mention of the grant of the patent: **25.10.2023**
(21) Application number: 21729199.6
(22) Date of filing: 03.03.2021
(51) Int. Cl.: C09D 5/08, C09D 175/06, C09D 201/00, C09D 7/63, C09D 7/61, C08G 18/28, C08G 18/42, C08G 18/44, C08G 18/48, C08G 18/73, C08G 18/76, C08G 18/79, C08G 18/80, C09D 175/08, C08K 3/22

(54) **RUST PREVENTIVE COATING COMPOSITION AND METHOD FOR PRODUCING RUST PREVENTIVE COATING FILM**
KORROSIONSBESTÄNDIGE BESCHICHTUNGSZUSAMMENSETZUNG UND VERFAHREN ZUR HERSTELLUNG EINES KORROSIONSBESTÄNDIGEN BESCHICHTUNGSFILMS
COMPOSITION DE REVÊTEMENT ANTIROUILLE ET PROCÉDÉ DE PRODUCTION D'UN FILM DE REVÊTEMENT ANTIROUILLE

(30) Priority: 10.12.2020 JP 2020205239
(43) Date of publication of application: 27.07.2022
(73) Proprietor: Nippon Paint Industrial Coatings Co., Ltd., Tokyo 140-8675 (JP)
(72) Inventor: TOZAKI, Yoichi, Tokyo 1408675 (JP); UCHIHASHI, Ryo, Osaka-shi Osaka 5318511 (JP); YAOITA, Satoshi, Osaka-shi Osaka 5318511 (JP)
(74) Representative: Mewburn Ellis LLP
(86) International application number: PCT/JP2021/008209
(87) International publication number: WO 2022/123802

(56) References cited:
- EP-A1- 3 745 493
- WO-A1-2012/050222
- WO-A1-2019/225764
- WO-A2-2008/146089
- JP-A- 2001 323 169
- JP-A- 2006 028 582
- JP-A- 2006 052 392
- JP-A- 2007 145 959
- JP-A- 2007 289 889
- JP-A- 2008 169 438
- JP-A- 2009 078 450
- JP-A- 2009 114 016
- JP-A- 2014 523 457
- JP-A- 2018 172 780
- JP-A- 2019 171 852
- JP-A- 2019 199 545

## Description

### TECHNICAL FIELD

The present invention relates to a corrosion-resistant coating composition and a method for producing a corrosion-resistant coating film using the coating composition.

### BACKGROUND ART

Coated steel plates prepared by coating substrates such as cold-rolled steel plates and plated steel plates are called pre-coated metal, and they are used for various applications such as outdoor units of air conditioners, exterior parts of home electric appliances for water heaters, and exterior building materials such as roofs and walls. For example, a coated steel plate comprising a galvanized steel plate is usually coated with a corrosion-resistant coating material on the surface thereof in order to improve the corrosion-resistant property to prevent rusting.

Conventionally, chromium-containing coating materials have been a commonly used corrosion-resistant coating materials and they are known to suppress the rusting by forming chromium-containing coating films. However, the use of chromium is becoming to be restricted due to the concern for its potential adverse environmental impact.

Hence proposed are coating compositions containing vanadium compounds as corrosion-resistant agents other than chromium compounds.

JP-A-2008-222834 (Patent Literature 1) discloses a coating composition comprising (A) a hydroxy group-containing coating film-forming resin, (B) a crosslinking agent, and (C) a corrosion-resistant pigment mixture, wherein the corrosion-resistant pigment mixture (C) is composed of (1) at least one vanadium compound selected from vanadium pentoxide, calcium vanadate and ammonium metavanadate, (2) a metal silicate, and (3) a phosphoric acid-based calcium salt.

JP-A-2009-227748 (Patent Literature 2) discloses a corrosion-resistant coating composition comprising (A) at least one hydroxy group-containing film-forming resin selected from specific acrylic resins and specific polyester resins, (B) a bisphenol-type epoxy resin, (C) a curing agent, (D) at least one adhesion-imparting resin selected from epoxy resins having a secondary or tertiary amino group, acrylic resins having a secondary or tertiary amino group, and resole-type phenol resins, and (E) a corrosion-resistant pigment. Further, it is disclosed that the corrosion-resistant pigment (E) comprises (1) at least one vanadium compound selected from vanadium pentoxide, calcium vanadate and ammonium metavanadate, (2) at least one silicon-containing compound selected from metal silicates and silica fine particles, and (3) a phosphoric acid-based metal salt.

JP-A-2007-145959 (Patent Literature 3) discloses an epoxy resin composition for sealing a semiconductor and a semiconductor device.

JP-A-2006-052392 (Patent Literature 4) discloses an epoxy resin molding material for encapsulation and an electronic device using this material.

EP3745493-A1 (Patent Literature 5) discloses a coating liquid for separators for lithium ion batteries, and separator for lithium ion batteries.

JP-A-2006-028582 (Patent Literature 6) discloses a surface-treated galvanized steel sheet having superior corrosion resistance at an end face.

### CITATIONS LIST

### PATENT LITERATURE

Patent Literature 1: JP-A-2008-222834
Patent Literature 2: JP-A-2009-227748
Patent Literature 3: JP-A-2007-145959
Patent Literature 4: JP-A-2006-052392
Patent Literature 5: EP3745493-A1
Patent Literature 6: JP-A-2006-028582

### SUMMARY OF INVENTION

### TECHNICAL PROBLEMS

Recently, durability of coated steel plates under various environmental conditions is further required recently.

For example, a phenomenon is recognized where coated steel plates are corroded by "acid rain." "Acid rain" is caused by dissolution of acid rain precursors such as sulfur dioxide (SO₂) and nitrogen oxides (NOₓ) into rain, snow, fog, and the like, and it exhibits stronger acidity than usual. In addition, acid rain precursors may migrate hundreds to thousands of kilometers across national borders from when they are released to when they fall as acid rain. The corrosion damages of coated steel plates are hence expected to increase over wide areas in the future.

Furthermore, when acid rain precursors exist in a dew condensation and humid environment, sulfides and/or nitrides contained in the acid rain precursors are exposed to a humid state, and these substances may advance the corrosion reaction on the coated steel plates.

However, the coating films formed from the coating compositions in Patent Literature 1 and 2 exhibits insufficient corrosion-resistant properties. For example, the corrosion-resistant properties are insufficient for application to outdoor use, and there is a room for improvement in the coating films of Patent Literature 1 and 2. Moreover, there is also a room for improvement in corrosion-resistant property under acidic environmental conditions.

Thus, a coating composition is required that has a corrosion-resistant property under acidic environmental conditions and a capability of forming a coating film having a corrosion-resistant property for a longer period.

Further, coated articles or coating films may be exposed to a high humidity environment when they are used outdoors, and therefore a coating composition is required that is capable of forming a coating film with superior moisture resistance.

The present invention is directed to provide a corrosion-resistant coating composition that is capable of forming a coating film with superior moisture resistance and a superior corrosion-resistant property for a long period, particularly over a long period even under acidic environmental conditions, further with superior storage stability. In the following, a corrosion-resistant coating composition may be referred to as a "coating composition".

### SOLUTIONS TO PROBLEMS

The present disclosure provides a corrosion-resistant coating composition according to claims 1-9 and a method for producing a corrosion-resistant coating film according to claim 10.

### ADVANTAGEOUS EFFECTS OF INVENTION

The present invention provides a corrosion-resistant coating composition that is capable of forming a coating film with superior moisture resistance and a superior corrosion-resistant property for a long period, particularly even under acidic environmental conditions over a long period, further with superior storage stability.

### BRIEF DESCRIPTION OF DRAWINGS

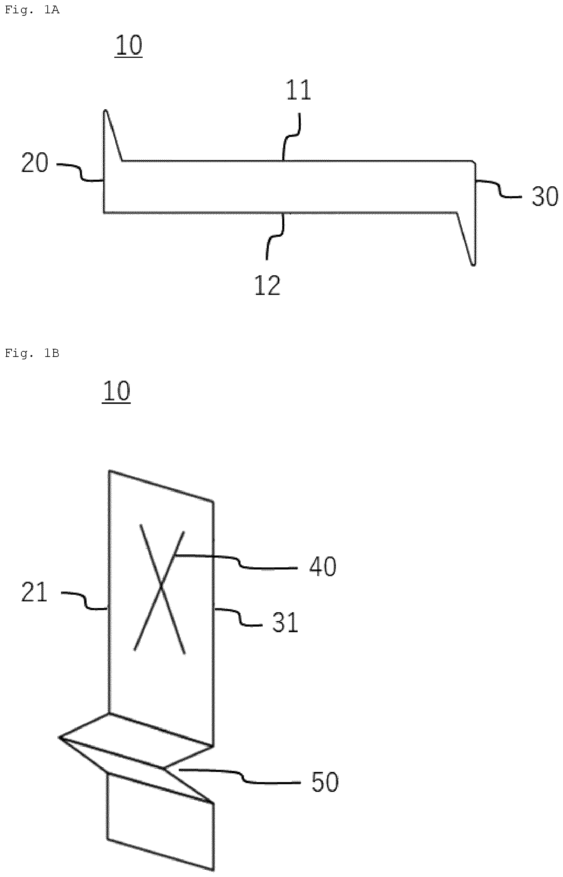

FIG. 1A is a schematic view showing an outline of a cross section of a coated steel plate specimen used in a corrosion resistance test.
FIG. 1B is a schematic view showing a crosscut part and a 4T folded part provided in a coated steel plate specimen used for a corrosion resistance test.

### DESCRIPTION OF EMBODIMENTS

The process leading to the present invention is described below.

Chromium compounds are used to impart a corrosion-resistant property to coating films. For example, a coating composition containing a chromium-based compound is well capable of suppressing the rusting satisfactorily on an article to be coated. Meanwhile, in the technical field of corrosion-resistant coating compositions, load reduction to human body and environment is also required, and reduction or avoidance of chromium compounds is supposed to be necessary in corrosion-resistant coating compositions in the future.

For example, vanadium compounds such as metal salts of vanadic acid are used for reducing chromium-based compounds. As a means for improving the corrosion-resistant property of a corrosion-resistant coating composition comprising a vanadium compound, an increase of the vanadium compound amount is reported to be effective in the coating composition.

However, since vanadium compounds, particularly vanadates, are highly water-soluble, coating films tend to absorb moisture when the coating compositions contain a large amount of vanadium compounds. It tends to result in a problem that moisture resistance of the coating film decreases, which may induce blisters on the coating film particularly in an acidic environment. Such blisters on a coating film may cause a decrease in corrosion-resistant property and a decrease in moisture resistance of the coating film. Accordingly, it may become difficult to form a coating film with moisture resistance and a long-term corrosion-resistant property when a coating composition contains a large amount of a vanadium compound.

Incidentally, in the conventional evaluation of corrosion-resistant property, the test time is short, and only a shaped portion (a flat surface of an article to be coated) has been used as an evaluation site.

However, coated articles with various shapes are manufactured recently. The protective effect of the coating film may be insufficient, for example, on a processed part, an edge face, a crosscut part, and the like in such coated articles with various shapes, and corrosion of the coated articles may occur from such parts.

A coating composition is therefore required that exhibits a superior corrosion-resistant property for a long period even, for example, on a processed part, an edge face, and a crosscut part and that further exhibits a corrosion-resistant property for an ultra-long period.

The present inventors diligently studied and accomplished the present invention.

The corrosion-resistant coating composition of the present disclosure comprises a coating film-forming resin (A), a crosslinking agent (B), and a magnesium hydroxide (C),
wherein the oil absorption of the magnesium hydroxide (C) is 70 g/100 g or less and wherein the BET specific surface area is 4.0 m²/g or less,
wherein the coating film-forming resin (A) comprises at least one selected from the group consisting of epoxy resin, polyester resin, acrylic resin, urethane resin, and modified products thereof,
wherein the crosslinking agent (B) comprises one or more selected from blocked polyisocyanate compounds and amino resins.

By using the corrosion-resistant coating composition of the present disclosure, a coating film is formed with superior moisture resistance and superior corrosion-resistant property over a long period. In particular, even under acidic environmental conditions, a coating film is formed with a superior corrosion-resistant property for a long period. The corrosion-resistant coating composition of the present disclosure is therefore capable of suppressing rusting that may occur due to "acid rain" for example. In addition, the corrosion-resistant coating composition of the present disclosure has superior storage stability. In the following, the coating film formed from the coating composition of the present disclosure may be referred to as the coating film of the present invention.

The reason why the coating film of the present invention has the above-mentioned corrosion-resistant property is considered as follows.

In order to suppress corrosion of a coated article (for example, steel plate), the coating film is required to continuously supply an active agent for corrosion suppression (corrosion-suppressing agent) to the part where corrosion occurs on the coated article. In the present invention, the active agent derived from the magnesium hydroxide (C) functions as a corrosion-suppressing agent. Since the magnesium hydroxide (C) has a relatively small BET specific surface area, a reaction on its surface is unlikely to occur. As a result, when the coating composition of the present disclosure is used, the magnesium hydroxide (C) is unlikely to elute from a coating film, and the magnesium hydroxide (C) is present in the coating film for a long period. A corrosion-suppressing agent is hence supposed to be supplied for a long period from a coating film to an article to be coated as a result when the coating composition of the present disclosure is used. Further, the above-mentioned oil absorption of the magnesium hydroxide (C) is also considered to afford stable supply of the corrosion-suppressing agent from the coating film to the article to be coated for a long period. Thus, the use of the coating composition of the present disclosure contributes to the prevention of corrosion of an article to be coated over a long period. Furthermore, the above-mentioned BET specific surface area and oil absorption is supposed to afford suppression of a significant increase in the elution amount of the magnesium hydroxide (C) even in an acidic environment, and corrosion is suppressed for a long period even under acidic conditions as a result. Further, the inclusion of the magnesium hydroxide (C) in the coating composition of the present disclosure affords a superior corrosion-resistant property for the coated article for a long period not only on a flat surface of an article to be coated but also on its processed part, edge face, and crosscut part. It thus affords a superior corrosion-resistant property for article to be coated with various shapes.

In addition, the coating film of the present invention has superior moisture resistance and water resistance, and blisters are unlikely to occur in the coating film. As a result, the coating film of the present invention has a superior corrosion resistance even when used in an acidic environment. The coating film of the present invention exhibits superior moisture resistance even when the coated article is exposed to a high temperature and high humidity environment in such a case of outdoor use for example. It should not be interpreted only in a specific theory, the reason why the above effects are obtained is however considered as follows. Assuming a case where a coating film contains moisture or humidity, an acid rain precursor is supposed to be absorbed by these moisture or humidity, and the corrosion of the coated article easily progresses as a result. The magnesium hydroxide (C) is however supposed to have low reactivity with water due to the above-mentioned BET specific surface area and oil absorption, and the coating film of the present invention has superior moisture resistance and water resistance as a result. The absorption of an acid rain precursor into the coating film is supposed to be suppressed in a coating film of the present invention due to its superior moisture resistance and water resistance, and the corrosion of the coated article is suppressed. The superiority in moisture resistance and water resistance of the coating film of the present invention suppresses blister in the coating film as well and further suppresses a decrease in corrosion-resistant property due to the blisters. Further, the magnesium hydroxide (C) exhibits superior dispersibility in the coating composition and contributes to the improvement in the storage stability of the coating composition as a result.

### [Magnesium hydroxide (C)]

The magnesium hydroxide (C) has an oil absorption of 70 g/100g or less and a BET specific surface area of 4.0 m²/g or less.

It should not be interpreted only in a specific theory, it is however considered that the oil absorption of the magnesium hydroxide (C) in the above range affords continuous and stable supply of a corrosion-suppressing agent to a part of an article where corrosion may occur, which affords a formation of a coating film with superior corrosion resistance. In this disclosure, the oil absorption can be measured in accordance with the provision of JIS K 5101.

The oil absorption of the magnesium hydroxide (C) may be, for example, 65 g/100 g or less.

In one embodiment, the oil absorption of the magnesium hydroxide (C) may be 20 g/100 g or more, for example, 25 g/100 g or more.

In one embodiment, the oil absorption of the magnesium hydroxide (C) is 20 g/100 g or more and 70 g/100 g or less, for example, 25 g/100 g or more and 65 g/100 g or less.

In the present disclosure, the oil absorption of the magnesium hydroxide (C) may be appropriately combined within the above range.

The BET specific surface area of the magnesium hydroxide (C) is preferably 3.5 m²/g or less, and more preferably 3.0 m²/g or less.

Such a BET specific surface area allows the coating composition of the present disclosure to form a coating film with a superior corrosion-resistant property for a longer period. More specifically, the coating composition of the present disclosure forms a coating film with a corrosion-resistant property for a long period, and a coating film capable of suppressing or significantly reducing corrosion in an acidic environment for a long period.

In the present disclosure, BET specific surface area can be measured using an automatic specific surface area analyzer GEMINI VII 23900 (manufactured by Shimadzu Corporation) for example.

In one embodiment, BET specific surface area of the magnesium hydroxide (C) may be 0.1 m²/g or more, for example 0.2 m²/g or more, and may be 0.3 m²/g or more.

In one embodiment, the BET specific surface area of the magnesium hydroxide (C) is 0.1 m²/g or more and 2.0 m²/g or less, for example, 0.3 m²/g or more and 1.5 m²/g or less.

In the present disclosure, the BET specific surface area of the magnesium hydroxide (C) may be appropriately combined within the above range.

In one embodiment, magnesium metal ion of an aqueous solution prepared by adding 1 g of the magnesium hydroxide (C) to 100 g of an artificial acidic seawater solution is 70 ppm or less.

It should not be interpreted only in a specific theory, however, the coating composition of the present disclosure supplies a corrosion-suppressing agent to an article to be coated ((for example, a steel plate) and the corrosion of the article is suppressed by comprising the magnesium hydroxide (C) that satisfies these conditions. The deterioration of the moisture resistance of a coating film is also suppressed or greatly reduced, and further, the blistering in a coating film is suppressed or greatly reduced. For example, by satisfying the above conditions, blistering of the coating film is suppressed in a high temperature and high humidity environment and delamination between the coating film and the coated article is suppressed for a long period. Further, blistering of the coating film in a processed part, an edge face, and a crosscut part is suppressed or greatly reduced.

In the present disclosure, the exhibition of a corrosion-resistant property in a high temperature environment refers to an exhibition of a superior corrosion-resistant property even under a condition where the atmospheric temperature is high (for example, 40°C or higher) and at a high temperature of about 80°C.

In one embodiment, the magnesium hydroxide (C) comprises a magnesium hydroxide in such an amount that affords a magnesium metal ion concentration of 69 ppm or less, for example, 66 ppm or less or 65 ppm or less, in an aqueous solution prepared by adding 1 g of the magnesium hydroxide (C) to 100 g of an artificial acidic seawater solution.

In one embodiment, the magnesium hydroxide (C) affords a magnesium metal ion concentration of 10 ppm or more, for example 20ppm or more in an aqueous solution prepared by adding 1 g of the magnesium hydroxide (C) of the present disclosure to 100 g of an artificial acidic seawater solution.

In the present disclosure, the magnesium metal ion concentration in an aqueous solution prepared by adding 1 g of the magnesium hydroxide (C) to 100 g of an artificial acidic seawater solution can be measured based on the JIS G 0594:2019 cyclic corrosion test method. For example, an aqueous solution based on an acidic aqueous salt solution used in Method B specified in the JIS G 0594:2019 cyclic corrosion test method can be used as an artificial acidic seawater solution.

In one embodiment, the measurement of magnesium metal ion can be performed as follows for example.

An artificial acidic seawater is prepared by adjusting pH to 2.5 by using a mixture of nitric acid and sulfuric acid specified in Section 4.1.1 of JIS G 0594:2019. For example, the MARINE ART Series (manufactured by Tomita Pharmaceutical Co., Ltd.) may be used as a reagent.

Next, 100 g of artificial acidic seawater and 1 g of the magnesium hydroxide (C) are added to a vessel and a stirrer chip is added, and the mixture is stirred at room temperature (23°C) for 4 hours.

Then, after leaving it at room temperature for 24 hours, the supernatant is collected with a syringe equipped with a syringe filter, and the magnesium metal ion concentration is specified by measuring the element concentration using an ICP emission spectrometer (ICPS-7510, manufactured by Shimadzu Corporation) for example.

Specifically, the value obtained by subtracting a blank from the element concentration (magnesium metal ion concentration) contained in the above supernatant may be used as a magnesium metal ion concentration in an aqueous solution prepared by adding 1 g of the magnesium hydroxide (C) to 100 g of an artificial acidic seawater solution. Here, the blank is a value obtained by measuring the element concentration (magnesium metal ion concentration) of the artificial acidic seawater in the same manner as for the supernatant.

In one embodiment, the magnesium hydroxide (C) is a compound that affords a conductivity of 250 µS/cm or less, for example, 210 µS/cm or less, in an aqueous solution prepared by adding 1 g of the magnesium hydroxide (C) to 100 g of purified water. Further, the magnesium hydroxide (C) may be a compound having a conductivity of 205 µS/cm or less, and may be, for example, a compound having a conductivity of less than 201 µS/cm.

In one embodiment, the magnesium hydroxide (C) may be a compound that affords a conductivity of 10 µS/cm or more, for example, 20 µS/cm or more, or 50 µS/cm or more, in an aqueous solution prepared by adding 1 g of the magnesium hydroxide (C) to 100 g of purified water.

In another embodiment, the magnesium hydroxide (C) is a compound that affords a conductivity of 250 µS/cm or less in an aqueous solution prepared by adding 1 g of the magnesium hydroxide (C) to 100 g of purified water. For example, the magnesium hydroxide (C) is, for example, a compound having a conductivity of 210 µS/cm or less, and may be a compound having a conductivity of 205 µS/cm or less, and may be a compound having a conductivity of less than 201 µS/cm. These conditions allows the corrosion-suppressing agent from the magnesium hydroxide (C) to be supplied further effectively and stably to a steel plate for a longer time without depletion, and it suppresses corrosion. Further, the deterioration of the moisture resistance of a coating film is suppressed or greatly reduced, and the blisters in the coating film is also suppressed or greatly reduced. Moreover, corrosion-resistant coating composition of the present disclosure suppresses or greatly reduces blistering in a processed part, an edge face, and a crosscut part.

In one embodiment, the magnesium hydroxide (C) may be a compound that affords a conductivity of 10 µS/cm or more, for example 20 µS/cm or more, or 50 µS/cm or more, in an aqueous solution prepared by adding 1 g of the magnesium hydroxide (C) to 100 g of purified water.

In the present disclosure, the conductivity can be measured as follows. Ion-exchanged water (100 g) and 1 g of the magnesium hydroxide (C) are mixed, a stirrer chip is added, and the mixture is stirred at room temperature (23°C) for 4 hours. Then, the conductivity can be measured using an electrical conductivity meter (CM-42X, manufactured by DKK-TOA Corporation) for example.

In one embodiment, the magnesium hydroxide (C) is a compound that affords a conductivity of 250 µS/cm or less in an aqueous solution prepared by adding 1 g of the magnesium hydroxide (C) to 100 g of purified water.

Corrosion in an acidic environment is suppressed for a longer period since the magnesium hydroxide (C) has the magnesium metal ion concentration and the conductivity as described above. Further, in addition to the suppression of corrosion in an acidic environment, blistering and delamination of a coating film is suppressed for a long period in a high temperature and high humidity environment. In the present disclosure, such a combination of magnesium metal ion concentration and conductivity can be appropriately selected within the ranges described in the present disclosure.

In one embodiment, the magnesium hydroxide (C) is a compound that affords a pH of 8 or more and 13 or less, for example 9 or more and 13 or less, or 10 or more and 13 or less, in an aqueous solution prepared by adding 1 g of the magnesium hydroxide (C) to 100 g of purified water. In another embodiment, the pH is 8 or more and 12 or less. By satisfying such conditions, increase in the corrosion rate of the coated article is suppressed more effectively, and a coating film with superior corrosion resistance can be formed.

In the present disclosure, the pH value can be measured by a known method. For example, 100 g of ion-exchanged water and 1 g of the magnesium hydroxide (C) are mixed, a stirrer chip is added, and the mixture is stirred at room temperature (23°C) for 4 hours. Then, the pH can be measured by using a pH meter (benchtop pH meter F-74, manufactured by HORIBA, Ltd.) for example.

In one embodiment, the average particle diameter of the magnesium hydroxide (C) is 0.5 um or more and 20 um or less, for example, 1 um or more and 15 um or less, and 1 um or more and 10 um or less. In the case where the average particle diameter is excessively small, the number of reaction points increases on the surface of the magnesium hydroxide (C) and corrosion of a coated article may not be sufficiently suppressed. In the case where the average particle diameter is excessively large, the coating film may have defects.

In the present disclosure, the average particle diameter can be measured using a laser diffraction type particle diameter distribution analyzer SALD-2300 (manufactured by Shimadzu Corporation) for example.

In one embodiment, the magnesium hydroxide (C) is comprised in an amount of 1 part by mass or more and 150 parts by mass or less, for example, 10 parts by mass or more and 140 parts by mass or less, relative to 100 parts by mass of the total of the solid content of the coating film-forming resin (A) and the solid content of the crosslinking agent (B). The magnesium hydroxide (C) content in the above range allows the coating composition of the present disclosure to form a coating film with a superior corrosion-resistant property for a long period and further superior moisture resistance.

The magnesium hydroxide (C) functions as a corrosion-resistant pigment in the coating composition of the present disclosure. In one embodiment, the magnesium hydroxide (C) is a corrosion-resistant pigment.

In one embodiment, the coating composition of the present disclosure may comprise other metal compounds as long as the effects of the magnesium hydroxide (C) are not impaired.

### [Coating film-forming resin (A)]

The coating film-forming resin (A) in the corrosion-resistant coating composition of the present disclosure is not particularly limited as long as it comprises a functional group capable of reacting with the crosslinking agent (B) and it has a coating film-forming ability, and comprises at least one selected from the group consisting of epoxy resin, polyester resin, acrylic resin, urethane resin, and modified products thereof.

Examples of the coating film-forming resin (A) include epoxy resin and modified products thereof (acrylic modified epoxy resins, and the like.); polyester resin and modified products thereof (urethane-modified polyester resins, epoxy-modified polyester resins, silicone-modified polyester resins, and the like); acrylic resin and modified products thereof (silicone-modified acrylic resins, and the like); urethane resin and modified products thereof (ester-based urethane resins, ether-based urethane resins, carbonate-based urethane resins, epoxy-based urethane resins, and the like); phenol resin and modified products thereof (acrylic-modified phenolic resins, epoxy-modified phenolic resins, and the like); phenoxy resin; alkyd resin and modified products thereof (urethane-modified alkyd resins, acrylic-modified alkyd resins, and the like); and such resins as fluororesin. These resins may be used singly, or two or more of them may be used in combination.

In the present disclosure, the coating film-forming resin (A) comprises at least one selected from the group consisting of epoxy resin, polyester resin, acrylic resin, urethane resin, and modified products thereof.

In one embodiment, the coating film-forming resin (A) comprises at least one selected from the group consisting of ester-based urethane resins, epoxy resin, polyester resin, and modified products thereof.

In one embodiment, in view of the folding processability of a resulting coating film or the balance among the moisture resistance, the corrosion resistance, and the weather resistance of a resulting coating film, the coating film-forming resin (A) comprises at least one selected from the group consisting of epoxy resin, polyester resin, urethane resin, and modified products thereof.

In one embodiment, the coating film-forming resin (A) comprises at least one selected from the group consisting of urethane resin and modified products thereof.

The number-average molecular weight of the coating film-forming resin (A) may be 1,000 or more and 40,000 or less. The number-average molecular weight within such a range allows the coating composition of the present disclosure to form a coating film with superior corrosion resistance, and further to form a coating film that is superior in adhesion to an article to be coated and to a topcoating composition (topcoating material).

### (Epoxy resin)

The number-average molecular weight (Mn) of the epoxy resin, for example, a hydroxy group-containing epoxy resin, which is a modified product of an epoxy resin, is preferably 1,400 or more and 20,000 or less, more preferably 2,000 or more and 10,000 or less, and particularly preferable 2,000 or more and 4,000 or less. Unless otherwise specified in the present disclosure, a simple term "epoxy resin" refers to an epoxy resin that comprises at least one selected from the group consisting of epoxy resin and modified products of epoxy resin.

In the present disclosure, the number-average molecular weight (Mn) is a polystyrene-equivalent value determined by gel permeation chromatography (GPC).

The number-average molecular weight mentioned above allows the crosslinking reaction between the epoxy resin and the crosslinking agent (B) described later to proceed sufficiently, and a coating film with high moisture resistance and superior corrosion resistance is formed. It should not be interpreted only in a specific theory, however, the number-average molecular weight mentioned above affords appropriate elution of magnesium hydroxide (C) comprised in a coating film, and a coating film is formed with superior corrosion resistance even in an acidic environment. Further, the crosslink density of the coating film is suppressed from becoming excessively high, and a coating film is formed with a sufficient elongation rate. For example, a coatings film is formed with a sufficient folding processability. Further, the corrosion-resistant coating composition of the present disclosure has an appropriate viscosity, and exhibits superior handleability such as coating material manufacturability and coating workability.

The glass transition temperature (Tg) of the epoxy resin may be 120°C or lower, and may be 115°C or lower. For example, the glass transition temperature (Tg) of the epoxy resin may be 110°C or lower. In one embodiment, the glass transition temperature (Tg) of the epoxy resin is 50°C or higher and may be 55°C or higher. For example, the glass transition temperature (Tg) of the epoxy resin may be in the range of 50°C or higher and 120°C or lower.

In the present disclosure, the glass transition temperature (Tg) can be measured using a thermal analyzer TMA7100 (manufactured by Hitachi High-Tech Science Corporation) for example.

When the glass transition temperature (Tg) of the epoxy resin is within the above range, the moisture permeability of a coating film is not excessively high, the moisture resistance is sufficient, and the corrosion resistance is also good.

The acid value of the epoxy resin (including modified products thereof) may be 0 mg KOH/g or more and 30 mg KOH/g or less.

In the present disclosure, the acid value means the solid acid value and can be measured in accordance with the provisions of JIS K 0070.

The epoxy resin may be a hydroxy group-containing epoxy resin (including a modified hydroxy group-containing epoxy resin).

Examples of the epoxy resin include a resin prepared by condensing epichlorohydrin and bisphenol to a high molecular weight optionally in the presence of a catalyst such as an alkaline catalyst; bisphenol type epoxy resins such as bisphenol A type and bisphenol F type; and novolak type epoxy resins.

Examples of the modified products of epoxy resin include modified epoxy resins such as acrylic-modified epoxy resins, urethane-modified epoxy resins, and amine-modified epoxy resins. For example, taking an acrylic-modified epoxy resin as an example, it can be prepared by reacting the bisphenol type epoxy resin or the novolak type epoxy resin with a polymerizable unsaturated monomer component containing acrylic acid, methacrylic acid, or the like.

Taking a urethane-modified epoxy resin as an example, it can be prepared by reacting the bisphenol type epoxy resin or the novolak type epoxy resin with a polyisocyanate compound.

Examples of the epoxy resin include jER1004, jER1007, 1255HX30 (bisphenol A skeleton) and YX8100BH30 manufactured by Mitsubishi Chemical Corporation.

### (Polyester resin)

The number-average molecular weight (Mn) of the polyester resin, for example, a hydroxy group-containing polyester resin, which is a modified product of a polyester resin, is preferably 1,400 to 40,000, more preferably 2,000 to 40,000, and particularly preferably 2,000 to 30,000.

Unless otherwise specified in the present disclosure, a simple term "polyester resin" refers to a polyester resin that comprises at least one selected from the group consisting of polyester resin and modified products of polyester resin.

The number-average molecular weight mentioned above allows the crosslinking reaction between the polyester resin and the crosslinking agent (B) to proceed sufficiently, and a coating film with high moisture resistance is formed. Further, superior corrosion resistance is ensured. It should not be interpreted only in a specific theory, however, the number-average molecular weight mentioned above allows the elution of magnesium hydroxide (C) comprised in a coating film to occur appropriately for example, and a coating film with superior corrosion resistance even under acidic environmental conditions is formed. Further, the crosslink density of the coating film is suppressed from becoming excessively high, and a coating film is formed with a sufficient elongation rate. For example, a coating film is formed with a sufficient folding processability. Further, the corrosion-resistant coating composition of the present disclosure has an appropriate viscosity, and exhibits superior handleability such as coating material manufacturability and coating workability.

The glass transition temperature (Tg) of the polyester resin is preferably -35°C or higher and 110°C or lower, for example, -30°C or higher and 80°C or lower, and may be -30°C or higher and 60°C or lower.

When the glass transition temperature (Tg) of the polyester resin is within the above range, the moisture permeability of a coating film is not excessively high, the moisture resistance of the coating film is sufficient, and the corrosion resistance is also good.

The acid value of the polyester resin (including modified products thereof) is, for example, 30 mg KOH/g or less, specifically, 0.1 mg KOH/g or more and 30 mg KOH/g or less, may be 0.1 mg KOH/g or more and 30 mg KOH/g or less, and may be 0.3 mg KOH/g or more and 30 mg KOH/g or less.

The acid value in such a range affords improvements in hydrolysis resistance and a formation of a coating film with moisture resistance. Further, superior corrosion resistance is ensured.

The polyester resin can be obtained by polycondensation of a polyhydric alcohol and a polybasic acid.

Specific examples of the polyhydric alcohol include ethylene glycol, diethylene glycol, polyethylene glycol, propylene glycol, dipropylene glycol, polypropylene glycol, neopentyl glycol, 1,2-butanediol, 1,3-butanediol, 2,3-butandiol or 1,4-butanediol, 1,5-pentanediol, 1,6-hexanediol, hydrogenated bisphenol A, hydroxyalkylated bisphenol A, 1,4-cyclohexanedimethanol, 2,2-dimethyl-3-hydroxypropyl-2,2-dimethyl-3-hydroxypropionate (BASHPN), N,N-bis-(2-hydroxyethyl)dimethylhydantoin, polycaprolactone polyol, glycerin, sorbitol, annitol, trimethylolethane, trimethylolpropane, trimethylolbutane, hexanetriol, pentaerythritol, dipentaerythritol, and tris-(hydroxyethyl)isocyanate. The polyhydric alcohols may be used singly, or two or more of them may be used in combination.

Specific examples of the polybasic acid include phthalic acid, phthalic anhydride, tetrahydrophthalic acid, tetrahydrophthalic anhydride, hexahydrophthalic acid, hexahydrophthalic anhydride, methyltetraphthalic acid, methyltetrahydrophthalic anhydride, hymic anhydride, trimellitic acid, trimellitic anhydride, pyromellitic acid, pyromellitic anhydride, isophthalic acid, terephthalic acid, maleic acid, maleic anhydride, fumaric acid, itaconic acid, adipic acid, azelaic acid, sebacic acid, succinic acid, succinic anhydride, lactic acid, dodecenylsuccinic acid, dodecenylsuccinic anhydride, cyclohexane-1,4-dicarboxylic acid, and endic anhydride. The polybasic acids may be used singly, or two or more of them may be used in combination.

Examples of the modified products of polyester resin include modified polyester resins such as urethane-modified polyester resins, epoxy-modified polyester resins, acrylic-modified polyester resins, and silicone-modified polyester resins.

The urethane-modified polyester resin is a resin having polyester as its main chain that is urethane-modified by modifying the ends thereof with isocyanate.

The silicone-modified polyester resin can be prepared by reacting a polyester resin with an organic silicone (for example, an organic silicone having a -SiOCH₃ group and/or a -SiOH group as a functional group and having a number-average molecular weight of about 300 to about 1,000). The amount of the organic silicone used is usually about 5 to about 50 parts by mass relative to 100 parts by mass of the polyester resin.

The urethane-modified polyester resin can be prepared by reacting the polyester resin with a polyisocyanate compound.

Examples of a polyester resin and a modified polyester resin having a hydroxy group include BECKOLITE 46-118, BECKOLITE M-6205-50, BECKOLITE M-6401-52, and BECKOLITE M-6402-50 manufactured by DIC Corporation, VYLON 220, VYLON UR3500, VYLON UR5537, VYLON UR8300, and VYLON UR4410 manufactured by Toyobo Co., Ltd.

### (Acrylic resin)

The number-average molecular weight (Mn) of the acrylic resin and modified products thereof is preferably 1,400 to 40,000, more preferably 2,000 to 40,000, and particularly preferably 2,000 to 30,000.

Unless otherwise specified in the present disclosure, the simple term "acrylic resin" means that the resin comprises at least one selected from the group consisting of acrylic resin and modified products of acrylic resin.

The number-average molecular weight mentioned above allows the crosslinking reaction between the acrylic resin and the crosslinking agent (B) to proceed sufficiently and a coating film with high moisture resistance is formed. Further, superior corrosion resistance is ensured. It should not be interpreted only in a specific theory, however, the number-average molecular weight mentioned above allows the elution of magnesium hydroxide (C) comprised in a coating film to occur appropriately for example, and a coating film is formed with superior corrosion resistance even under acidic conditions. Further, the crosslink density of the coating film is suppressed from becoming excessively high, and a coating film is formed with a sufficient elongation rate. For example, a coating film is formed with a sufficient folding processability. Further, the corrosion-resistant coating composition of the present disclosure has an appropriate viscosity, and exhibits superior handleability such as coating material manufacturability and coating workability.

The glass transition temperature (Tg) of the acrylic resin is preferably -35°C or higher and 110°C or lower, for example, -30°C or higher and 80°C or lower, and may be - 30°C or higher and 60°C or lower.

When the glass transition temperature (Tg) of the acrylic resin is within the above range, the moisture permeability of a coating film is not excessively high, the moisture resistance of the coating film is sufficient, and the corrosion resistance is also good.

The acid value of the acrylic resin (including modified products thereof) is 0.1 mg KOH/g or more and 30 mg KOH/g or less, for example 0.1 mg KOH/g or more and 30 mg KOH/g or less, and may be 0.3 mg KOH/g or more and 30 mg KOH/g or less.

When the acid value is in such a range, for example, hydrolysis resistance is improved and also a coating film is formed with moisture resistance. Further, superior corrosion resistance is ensured.

Examples of the acrylic resin include acrylic resins made up of one, or two or more of monomers selected from (meth)acrylic monomers having a hydroxy group, such as hydroxymethyl (meth)acrylate, hydroxyethyl (meth)acrylate, hydroxypropyl (meth)acrylate, hydroxybutyl (meth)acrylate and N-methylolacrylamide, and lactone adducts thereof; (meth)acrylic acid; (meth)acrylic acid esters, such as alkyl (meth)acrylate; and (meth)acrylonitrile. The acrylic resin may contain, in addition to the constitutional units derived from the above-mentioned monomers, constitutional units derived from other monomers (for example, carboxyl group-containing ethylenic monomers such as crotonic acid, itaconic acid, fumaric acid, and maleic acid, and vinyl-based monomers such as styrene). In the present disclosure, (meth)acrylic acid represents acrylic acid or methacrylic acid.

Examples of the modified products of acrylic resin include modified acrylic resins such as silicone-modified acrylic resins. For example, taking a silicone-modified acrylic resin as an example, this can be prepared by reacting an acrylic resin with such an organic silicone that was described above. The amount of the organic silicone is usually about 5 to about 50 parts by mass relative to 100 parts by mass of the acrylic resin.

### (Urethane resin)

In one embodiment, the number-average molecular weight (Mn) of the urethane resin and the modified urethane resin is 1,000 or more and 30,000 or less, for example, 2,000 or more and 28,000 or less, and may be 2,500 or more and 25,000 or less. In one embodiment, the number-average molecular weight (Mn) of the urethane resin and the modified urethane resin is 6,000 or more and 15,000 or less.

Unless otherwise specified in the present disclosure, a simple term "urethane resin" means that the urethane resin comprises at least one selected from the group consisting of urethane resin and modified products of urethane resin.

The number-average molecular weight mentioned above allows the crosslinking reaction between the urethane resin and the crosslinking agent (B) to proceed sufficiently and a coating film with high moisture resistance is formed. Further, superior corrosion resistance is ensured. For example, it should not be interpreted only in a specific theory, however, the number-average molecular weight mentioned above allows the elution of magnesium hydroxide (C) comprised in a coating film to occur appropriately, and a coating film is formed with superior corrosion resistance even under acidic conditions. Further, the crosslink density of the coating film is suppressed from becoming excessively high, and a coating film is formed with a sufficient elongation rate. For example, a coating film is formed with a sufficient folding processability. Further, the corrosion-resistant coating composition of the present disclosure has an appropriate viscosity, and exhibits superior handleability such as coating material manufacturability and coating workability.

In one embodiment, the glass transition temperature (Tg) of the urethane resin is -30°C or higher and 80°C or lower, for example -30°C or higher and 60°C or lower, and may be -30°C or higher and 50°C or lower. In another embodiment, the glass transition temperature (Tg) of the urethane resin is -50°C or higher and 70°C or lower.

When the glass transition temperature (Tg) of the urethane resin is within the above range, the moisture permeability of a coating film is not excessively high, the moisture resistance of the coating film is sufficient, and the corrosion resistance is also good.

The acid value of the urethane resin (including modified products thereof) is 0.1 mg KOH/g or more and 30 mg KOH/g or less, for example 0.1 mg KOH/g or more and 30 mg KOH/g or less, and may be 0.3 mg KOH/g or more and 30 mg KOH/g or less.

When the acid value is in such a range, for example, hydrolysis resistance is improved and also a coating film is formed with moisture resistance. Further, superior corrosion resistance is ensured.

In one embodiment, the urethane group concentration (mass%) in the urethane resin in the present disclosure is 2% by mass or more and 20% by mass or less, for example 50 by mass or more and 17% by mass or less.

When the urethane group concentration in the resin of the urethane resin is within such a range, superior moisture resistance and corrosion resistance is ensured in a formed coating film.

Examples of the urethane resin include those obtained by reacting a polyol compound with a polyisocyanate compound and then further chain-extending with a chain extender.

The polyol compound is not particularly limited as long as it is a compound containing two or more hydroxy groups per molecule, and examples thereof include ethylene glycol, propylene glycol, diethylene glycol, 1,6-hexanediol, neopentyl glycol, triethylene glycol, glycerin, trimethylolethane, trimethylolpropane, polycarbonate polyols, polyester polyols, polyether polyols such as bisphenol hydroxypropyl ether, polyesteramide polyols, acrylic polyols, polyurethane polyols, or mixtures thereof.

The polyisocyanate compound is not particularly limited as long as it is a compound containing two or more isocyanate groups per molecule, and examples thereof include aliphatic isocyanates such as hexamethylene diisocyanate (HDI), alicyclic diisocyanates such as isophorone diisocyanate (IPDI), aromatic diisocyanates such as tolylene diisocyanate (TDI), aromatic aliphatic diisocyanates such as diphenylmethane diisocyanate (MDI), or mixtures thereof.

The chain extender is not particularly limited as long as it is a compound containing one or more active hydrogen atoms in the molecule, and water or an amine compound can be applied. Examples of the amine compound include aliphatic polyamines such as ethylenediamine, propylenediamine, hexamethylenediamine, diethylenetriamine, dipropylenetriamine, triethylenetetramine, and tetraethylenepentamine, aromatic polyamines such as tolylenediamine, xylylenediamine, and diaminodiphenylmethane, alicyclic polyamines such as diaminocyclohexylmethane, piperazine, 2,5-dimethylpiperazine, and isophoronediamine, hydrazines such as hydrazine, succinic dihydrazide, adipic dihydrazide, and phthalic dihydrazide, and alkanolamines such as hydroxyethyldiethylenetriamine, 2-[(2-aminoethyl)amino]ethanol, and 3-aminopropanediol.

In one embodiment, the urethane resin comprises at least one selected from the group consisting of ester-based urethane resins, ether-based urethane resins, and carbonate-based urethane resins.

In one embodiment, the urethane resin is an ester-based urethane resin.

In the present disclosure, the ester-based urethane resin refers to a resin having both urethane groups and ester groups in the main chain. Further, a resin is called an ester-based urethane resin when the number of urethane groups is larger than the number of ester groups by 5% or more based on a comparison between the number of urethane groups and the number of ester groups in the main chain of the resin.

In one embodiment, the urethane resin can be prepared by polycondensation of a copolymerized polyester resin having hydroxy groups with a polyisocyanate compound. In one embodiment, the hydroxy group-containing polyester resin can be prepared by polycondensing an acid component such as a polycarboxylic acid and/or an acid anhydride with a polyhydric alcohol.

In one embodiment, the urethane resin is an ether-based urethane resin. In the present disclosure, the ether-based urethane resin refers to a resin having both urethane groups and ether groups in the main chain. Further, a resin is called an ether based urethane resin when the number of urethane groups is larger than the number of ether groups by 5% or more based on a comparison between the number of urethane groups and the number of ester groups in the main chain of the resin.

In one embodiment, the urethane resin is a carbonate-based urethane resin. In the present disclosure, the carbonate-based urethane resin refers to a resin having both urethane groups and carbonate groups in the main chain. Further, a resin is called a carbonate-based urethane resin when the number of urethane groups is larger than the number of carbonate groups by 5% or more based on a comparison between the number of urethane groups and the number of carbonate groups in the main chain of the resin.

In one embodiment, the acid value of the ester-based urethane resin, the ether-based urethane resin, and the carbonate-based urethane resin is 0.1 mg KOH/g or more and 50 mg KOH/g or less, for example, 0.1 mg KOH/g or more and 40 mg KOH/g or less, and may be 0.3 mg KOH/g or more and 40 mg KOH/g or less. When the acid value is in such a range, for example, hydrolysis resistance is improved and also a coating is formed with having moisture resistance. Further, superior corrosion resistance is ensured.

Examples of the polycarboxylic acid that forms the copolymerized polyester resin having hydroxy groups include aliphatic polycarboxylic acids such as oxalic acid, succinic acid, adipic acid, and azelaic acid, aromatic polycarboxylic acids such as terephthalic acid, isophthalic acid, orthophthalic acid, 4,4'-diphenyldicarboxylic acid, and trimellitic acid, and examples of the polyol component include ethylene glycol, propylene glycol, trimethylene glycol, 1,3-butadiol, 1,4-butadiol, 1,5-bentandiol, 1,6-hexanediol, neopentyl glycol, trimethylolpropane, trimethylolethane, and pentaerythritol.

The copolymerized polyester of the present disclosure is preferably one in which the equivalent ratio of the carbonyl groups in the polycarboxylic acid and the hydroxy groups of the polyol component is in the range of 1.0/1.001 to 1.0/2.0 and the hydroxy groups are excessively blended, and it can be prepared by a usual transesterification method or a direct esterification reaction. A particularly preferable equivalent ratio is in the range of 1.0/1.01 to 1.0/1.5.

The acid anhydride that may be comprised in the acid component is not particularly limited and examples thereof include phthalic anhydride, tetrahydrophthalic anhydride, hexahydrophthalic anhydride, methyltetrahydrophthalic anhydride, hymic anhydride, trimellitic anhydride, pyromellitic dianhydride, maleic anhydride, succinic anhydride, and dodecenylsuccinic anhydride.

In the preparation of the hydroxy group-containing polyester resin, other reaction components may be used in addition to the acid component and the polyol component. Examples of the other reaction components include monocarboxylic acids, hydroxycarboxylic acids, lactones, drying oils, semi-drying oils, and fatty acids thereof. More specific examples include monoepoxide compounds such as Cardura E (manufactured by Shell Chemicals) and lactones. The lactones can be ring-opened and added to polyesters of polycarboxylic acids and polyhydric alcohols to form graft chains and examples thereof include β-propiolactone, dimethylpropiolactone, butyllactone, γ-valerolactone, ε-caprolactone, γ-caprolactone, γ-caprylolactone, crotolactone, δ-valerolactone, and δ-caprolactone. Of these, ε-caprolactone is the most preferable.

The ester-based urethane resin can be prepared by reacting a hydroxy group-containing polyester resin with an aliphatic diisocyanate compound, for example, by a conventionally known method.

In the coating composition of the present disclosure, a thermoplastic resin may also be used in addition to the coating film-forming resin (A).

Examples of the thermoplastic resin include chlorinated olefin-based resins such as chlorinated polyethylene and chlorinated polypropylene; homopolymers or copolymers comprising vinyl chloride, vinyl acetate, vinylidene chloride, and the like as monomer components; cellulose-based resins; acetal resins; alkyd resins; chlorinated rubber-based resins; modified polypropylene resins (acid anhydride-modified polypropylene resins, and the like); and fluororesins (for example, vinylidene fluoride resin, vinyl fluoride resin, copolymers of fluorinated olefin and vinyl ether, and copolymers of fluorinated olefin and vinyl ester).

As the thermoplastic resin, only one may be used alone, or two or more may be used in combination. By using the thermoplastic resin in combination, further superior coating film properties such as coating film strength and elongation are obtained.

### [Crosslinking agent (B)]

The crosslinking agent (B) reacts with the coating film-forming resin (A) to form a cured coating film.

Examples of the crosslinking agent (B) include polyisocyanate compounds; blocked polyisocyanate compounds in which isocyanate groups of polyisocyanate compounds are blocked with active hydrogen-containing compounds (sometimes referred to as "BI"); amino resins; and phenol resins.

Of these, the crosslinking agent (B) comprises one or more selected from blocked polyisocyanate compounds and amino resins.

Such a crosslinking agent (B) affords coating films with a superior corrosion-resistant property for a long period and further a superior moisture resistance.

The polyisocyanate compound and the polyisocyanate compound that constitutes the blocked polyisocyanate compound are not particularly limited, and conventionally known ones may be used. Specific examples include 1,4-tetramethylene diisocyanate, 1,6-hexamethylene diisocyanate, 1,12-dodecamethylene diisocyanate, cyclohexane-1,3- or 1,4-diisocyanate, 1-isocyanato-3-isocyanatomethyl-3,5,5-trimethylcyclohexane (also known as isophorone diisocyanate; IPDI), dicyclohexylmethane-4,4'-diisocyanate (also known as hydrogenated MDI), 2- or 4-isocyanatocyclohexyl-2'-isocyanatocyclohexylmethane, 1,3- or 1,4-bis-(isocyanatomethyl)-cyclohexane, bis-(4-isocyanato-3-methylcyclohexyl)methane, 1,3- or 1,4-α,α,α',α'-tetramethylxylylene diisocyanate, 2,4- or 2,6-diisocyanatotoluene, 2,2'-, 2,4'- or 4,4'-diisocyanatodiphenylmethane (MDI), 1,5-naphthalene diocyanate, p- or m-phenylene diocyanate, xylene diisocyanate, and diphenyl-4,4'-diisocyanate. Further, as the polyisocyanate compound, a cyclized polymer of each diisocyanate (isocyanurate type), an isocyanate/biuret body (biuret type), or an adduct type may be used.

The polyisocyanate compound may be used singly, or two or more may be used in combination. The isocyanurate-type polyisocyanate compound is one of those preferably used in the present invention.

As the polyisocyanate compound, for example, it is preferable to use an aromatic polyisocyanate compound containing one or more aromatic functional groups in the molecule. By using the aromatic polyisocyanate compound, the moisture resistance of a coating film is improved and the strength of a coating film is also improved. Examples of a preferable aromatic polyisocyanate compound include 2,4- or 2,6-diisocyanatotoluene (TDI), 2,2'-, 2,4'-or 4,4'-diisocyanatodiphenylmethane (MDI), xylene diisocyanate (XDI), and naphthalene diisocyanate (NDI).

The isocyanate group content of the polyisocyanate compound that forms the blocked polyisocyanate compound as measured in accordance with JIS K 7301-1995 is usually 3 to 20%, preferably 5 to 15% in the solid content of the polyisocyanate compound. When the isocyanate group content is within the above range, the curability of a coating film is further improved. In addition, an excessively high crosslink density is suppressed in a resulting coating film, and superior corrosion resistance is obtained.

The active hydrogen-containing compound (blocking agent) to be used for the blocked polyisocyanate compound is not particularly limited, and examples thereof include compounds having an -OH group (alcohols, phenols, and the like), an =N-OH group (oximes, and the like), an =N-H group (amines, amides, imides, lactams, and the like), or a -CH₂-group (active methylene group), and azoles. Specific examples include phenol, cresol, xylenol, ε-caprolactam, σ-valerolactam, γ-butyrolactam, methanol, ethanol, n-, i-, or t-butyl alcohol, ethylene glycol monoethyl ether, ethylene glycol monobutyl ether, diethylene glycol monoethyl ether, propylene glycol monomethyl ether, benzyl alcohol, formamide oxime, acetoaldoxime, acetoxime, methyl ethyl ketoxime, diacetyl monoxime, benzophenone oxime, cyclohexane oxime, dimethyl malonate, ethyl acetoacetate, acetyl acetone, and pyrazole. The active hydrogen-containing compounds may be used singly, or two or more of them may be used in combination.

The thermal dissociation temperature of the blocked polyisocyanate compound depends on the types of the polyisocyanate compound and the active hydrogen-containing compound constituting the blocked polyisocyanate compound, the presence or absence of a catalyst, and the amount thereof. In the present disclosure, a blocked polyisocyanate compound having a thermal dissociation temperature (in a catalyst-free condition) of 120 to 180°C is preferably used. By using a blocked polyisocyanate compound having a dissociation temperature within this range, the stability of the coating material is improved, further the compound is superior in crosslinking reactivity with the coating film-forming resin (A), and therefore a coating film with superior moisture resistance is obtained. Examples of the blocked polyisocyanate compound having a dissociation temperature of 120 to 180°C include Desmodur BL3175 manufactured by Sumika Covestro Urethane Co., Ltd. and Coronate 2554 manufactured by Tosoh Corporation.

In the present disclosure, the blocked polyisocyanate compound may be referred to as (BI).

Examples of the amino resin include melamine resin and urea resin, and among them, melamine resin is preferably used. "Melamine resin" generally refers to a thermosetting resin synthesized from melamine and aldehyde, and has three reactive functional groups -NX¹X² in one triazine nucleus molecule. Examples of the melamine resin include the following four types: a complete alkyl type containing -N-(CH₂OR)₂ [R is an alkyl group, the same applies hereinafter] as a reactive functional group; a methylol group type containing -N-(CH₂OR)(CH₂OH) as a reactive functional group; an imino group type containing -N-(CH₂OR)(H) as a reactive functional group; a methylol/imino group type containing -N-(CH₂OR)(CH₂OH) and -N-(CH₂OR)(H) or containing -N-(CH₂OH)(H) as reactive functional groups.

In the present disclosure, among the above-mentioned melamine resins, preferably used are melamine resins having one or more methylol groups or imino groups on average in one molecule, namely, methylol group-type, imino group-type, or methylol/imino group-type melamine resins or mixtures thereof.

Examples of the melamine resin include MYCOAT 715 as the trade name manufactured by Allnex Japan Inc.

Amino resins such as melamine resin exhibit superior crosslinking reactivity with the coating film-forming resin (A) even in the absence of catalyst and afford coating films with superior moisture resistance.

In the present disclosure, the melamine resin may be referred to as (MF).

The amount of the crosslinking agent (B) of the present disclosure is preferably 1 part by mass or more and 150 parts by mass or less, for example 2 parts by mass or more and 150 parts by mass or less, in terms of solid content relative to 100 parts by mass of the solid content of the coating film-forming resin (A). The crosslinking agent (B) content under such conditions affords a coating film with a superior corrosion-resistant property for a long period and further superior moisture resistance.

In one embodiment, the amount of the crosslinking agent (B) is 5 parts by mass or more and 95 parts by mass or less in terms of solid content relative to 100 parts by mass of the solid content of the coating film-forming resin (A). The crosslinking agent (B) content under such conditions allows the crosslinking reaction between the coating film-forming resin (A) and the crosslinking agent (B) to proceed more satisfactorily, and a coating film with better moisture resistance and corrosion resistance is formed. Further, the magnesium hydroxide (C) comprised in a coating film is stably eluted for a long period, and a coating film with further superior corrosion resistance is obtained.

### [Extender pigment]

The coating composition of the present disclosure may further comprise at least one extender pigment selected from the group consisting of calcium carbonate, barium sulfate, clay, talc, mica and silica.

The extender pigment affords further improvement in the strength of a coating film, and surface roughness generation on the surface of a coating film to be formed from the coating composition according to the present invention, without impairing the physical properties of the coating film. The adhesion to a topcoating film is thereby further improved. Moreover, the moisture resistance is improved.

In one embodiment, the amount of the extender pigment is 1 part by mass or more and 40 parts by mass or less, for example 10 parts by mass or more and 30 parts by mass or less relative to 100 parts by mass of the total solid content of the coating film-forming resin (A) and the crosslinking agent (B). The amount of the extender pigment within such a range allows the moisture resistance of a coating film to improve. Further, the moisture permeability of the coating film is suppressed from being excessively high. For example, water is suppressed from penetrating the coating film excessively and the moisture resistance of the coating film is improved.

### [Coupling agent]

The coating composition of the present disclosure may further comprise at least one coupling agent selected from the group consisting of silane-based coupling agents, titanium-based coupling agents and zirconium-based coupling agents.

The addition of the coupling agent the adhesion between the base material (article to be coated) and a coating film formed from the coating composition of the present disclosure to be further improved, and the moisture resistance of the coating film is further improved.

The coupling agent is not particularly limited, and conventionally known ones may be used. Specific examples of preferably used coupling agents include silane-based coupling agents such as Z-6011 and Z-6040 manufactured by Dow Toray Co., Ltd.; titanium-based coupling agents such as ORGATIX TC-401 and ORGATIX TC-750 manufactured by Matsumoto Fine Chemical Co., Ltd.; and zirconium-based coupling agents such as ORGATIX ZC-580 and ORGATIX ZC-700 manufactured by Matsumoto Fine Chemical Co., Ltd. Of these, silane-based coupling agents are preferably used.

The amount of the coupling agent may be 0.1 part by mass or more and 20 parts by mass or less, for example may be 0.5 parts by mass or more and 10 parts by mass or less relative to 100 parts by mass of the total solid content of the coating film-forming resin (A) and the crosslinking agent (B).

The amount of the coupling agent within such a range affords an improvement in the moisture resistance of a coating film and also a sufficient maintenance of the storage stability of the coating composition.

### [Curing catalyst]

When a blocked polyisocyanate compound and/or a polyisocyanate compound is used as the crosslinking agent (B), the coating composition of the present disclosure may further comprise a curing catalyst.

Examples of the curing catalyst include tin catalysts, amine catalysts, and lead catalysts, and among them, organotin compounds are preferably used.

As the organotin compound, for example, dibutyltin dilaurate (DBTL), dibutyltin oxide, and tetra-n-butyl-1,3-diacetoxystannoxane can be used.

The amount of the curing catalyst may be 0.1 part by mass or more and 10 parts by mass or less, for example may be 0.1 part by mass or more and 1.0 part by mass or less relative to 100 parts by mass of the total solid content of the coating film-forming resin (A) and the crosslinking agent (B). The amount of the curing catalyst within such a range affords sufficient maintenance of the storage stability of the coating composition for example.

Also when an amino resin is used as the crosslinking agent (B), the coating composition of the present disclosure may comprise a curing catalyst.

Examples of the curing catalyst in this case include acid catalysts such as carboxylic acid and sulfonic acid, and among them, dodecylbenzenesulfonic acid and paratoluenesulfonic acid are preferably used.

The content of the curing catalyst is, for example, 0.1 parts by mass or more and 10 parts by mass or less, and may be 0.1 parts by mass or more and 1.0 part by mass or less relative to 100 parts by mass of the total solid content of the coating film-forming resin (A) and the crosslinking agent (B). The amount of the curing catalyst within such a range affords sufficient maintenance of the storage stability of the coating composition for example.

### [Other additives]

The coating composition of the present disclosure may comprise additives other than those mentioned above, as necessary.

Examples of such other additives include corrosion-resistant pigments other than the magnesium hydroxide (C); extender pigments other than the above-described extender pigment; coloring agents such as coloring pigments and dyes; luster pigments; solvents; ultraviolet absorbers (benzophenone-based ultraviolet absorbers); antioxidants (phenolic-based, sulfide-based, or hindered amine-based antioxidants, and the like); plasticizers; surface conditioning agents (silicone, organic polymers, and the like); sagging inhibitors; viscosity control agents; lubricants such as wax; pigment dispersants; pigment wetting agents; leveling agents; color separation inhibitors; suspending agents; defoaming agents; antiseptic agents; antifreezing agents; emulsifiers; antifungal agents; antibacterial agents; and stabilizers.

These additives may be used singly, or two or more of them may be used in combination.

Examples of the corrosion-resistant pigment other than magnesium hydroxide (C) include non-chromium corrosion-resistant pigments. The non-chromium corrosion-resistant pigments may be used as long as the effects by the present disclosure are not impaired.

Examples of the non-chromium corrosion-resistant pigments include molybdate pigments (zinc molybdate, strontium molybdate, and the like), phosphomolybdate pigments (aluminum phosphomolybdate pigments, and the like), calcium silica-based pigments, phosphate-based corrosion-resistant pigments, silicate-based corrosion-resistant pigments, vanadate-based corrosion-resistant pigments, hydroxides or oxides of Group 2 elements such as calcium hydroxide and magnesium oxide.

These may be used singly, or two or more of them may be used in combination. The coating composition of the present disclosure exhibits sufficiently high corrosion resistance since it comprises a prescribed magnesium hydroxide (C), and it may further comprise a corrosion-resistant pigment other than the magnesium hydroxide (C) such as those mentioned above as necessary.

As other pigments other than the extender pigment, alumina, bentonite and the like may be added as long as the moisture resistance, the corrosion-resistant property, the folding processability, and the like of a resulting coating film are not impaired. These may be used singly, or two or more of them may be used in combination.

Examples of the coloring pigments include coloring inorganic pigments such as titanium dioxide, carbon black, graphite, iron oxide, and coal dust; coloring organic pigments such as phthalocyanine blue, phthalocyanine green, quinacridone, perylene, anthrapyrimidine, carbazole violet, anthrapyridine, azo orange, flavanthrone yellow, isoindoline yellow, azo yellow, indanthrone blue, dibromanzathrone red, perylene red, azo red, and anthraquinone red; aluminum powder, alumina powder, bronze powder, copper powder, tin powder, zinc powder, iron phosphide, and atomized titanium. These may be used singly, or two or more of them may be used in combination.

Examples of the luster pigments include foil pigments such as aluminum foil, bronze foil, tin foil, gold foil, silver foil, titanium metal foil, stainless steel foil, alloy foil of nickel, copper and the like, and foil-like phthalocyanine blue. These may be used singly, or two or more of them may be used in combination.

Examples of the solvent include water; glycol-based organic solvents such as ethylene glycol monobutyl ether (butyl cellosolve), diethylene glycol monobutyl ether, triethylene glycol monoethyl ether, propylene glycol monomethyl ether, propylene glycol monoethyl ether, propylene glycol monopropyl ether, dipropylene glycol monomethyl ether, dipropylene glycol monoethyl ether, and propylene glycol monomethyl ether acetate; alcohol-based organic solvents such as methanol, ethanol, and isopropyl alcohol; ether-based organic solvents such as dioxane and tetrahydrofuran; ester-based organic solvents such as 3-methoxybutyl acetate, ethyl acetate, isopropyl acetate, and butyl acetate; ketone-based organic solvents such as methyl ethyl ketone, acetone, methyl isobutyl ketone, cyclohexanone, and isophorone; N-methyl-2-pyrrolidone, toluene, pentane, iso-pentane, hexane, iso-hexane, and cyclohexane, solvent naphtha, mineral spirits, Solvesso 100, and Solvesso 150 (Solvesso are both aromatic hydrocarbon-based solvents manufactured by Shell Chemicals). These may be used singly, or two or more of them may be used in combination.

The coating composition of the present disclosure may be either a water-borne coating material or an organic solvent-borne coating material.

The coating composition of the present disclosure may be applied as an undercoating material, which is also called a primer. Further, it may be used as a topcoating material to be overlaid on an undercoating material. Moreover, it may be used as an intermediate coating material to form an intermediate layer between an undercoating material and a topcoating material.

In another embodiment, the coating composition of the present disclosure may be used as a coating composition not only for forming a multi-layer coating film but also for forming a single-layer coating film.

The coating composition of the present disclosure exhibits superior corrosion resistance and moisture resistance when it is used at any part of a multi-layer coating film. The undercoating material, the topcoating material and the intermediate coating material other than the coating composition of the present disclosure may be those conventionally known. Examples of the undercoating material include conventionally known non-chromium corrosion-resistant coating materials, and examples of the topcoating material and the intermediate coating material include polyester resin-based coating materials and fluororesin-based coating materials.

The coating composition of the present disclosure is preferably used as an undercoating material. When the coating composition of the present disclosure is used as an undercoating material, it exhibits particularly superior adhesion on a contact surface with a coating film formed of a topcoating material or an intermediate coating material that is in direct contact with the undercoating material.

### [Method for preparing coating composition]

The method for preparing the coating composition of the present disclosure is not particularly limited. The coating composition of the present disclosure can be prepared, for example, by mixing a coating film-forming resin (A), a crosslinking agent (B) and a magnesium hydroxide (C), in addition, a thermoplastic resin, an extender pigment, a coupling agent, a curing catalyst and other additives, which are optionally used, by using a mixer such as a roller mill, a ball mill, a bead mill, a pebble mill, a sand grind mill, a pot mill, a paint shaker, and a disper.

In another embodiment, the coating composition of the present disclosure may be a two-component type coating material composed of a base component comprising a coating film-forming resin (A) and a magnesium hydroxide (C) and a crosslinking agent component comprising a crosslinking agent (B).

### [Article to be coated]

The article is not particularly limited, on which a coating film of the corrosion-resistant coating composition of the present disclosure is formed, as long as it is required to have corrosion resistance. Examples thereof comprise steel plate that serves as a substrate for precoated metal (coated steel plate), and the like.

Examples of the steel plate include galvanized steel plate, cold-rolled steel plate, stainless steel plate, and aluminum plate.

Examples of galvanized steel plates include zinc-containing plated steel plates that utilize sacrificial protection of zinc, specifically, hot-dip galvanized steel plates, electrogalvanized steel plates, alloyed hot-dip galvanized steel plates, aluminum-zinc plated steel plates, and nickel-zinc plated steel plates, magnesium-aluminum-zinc plated steel plates, and magnesium-aluminum-silica-zinc plated steel plates.

The steel plate is preferably one surface-treated with a chemical conversion treatment agent before coating. The surface treatment may be carried out by a conventionally known method, and examples thereof include chromate treatment and non-chromate treatment such as zinc phosphate treatment. While the surface treatment may be appropriately selected depending on the steel plate to be used, a treatment free of heavy metals is preferable.

### [Method for manufacturing corrosion-resistant coating film]

In a certain embodiment, the present disclosure provides a method for producing a corrosion-resistant coating film, comprising a coating step of applying the coating composition of the present invention to an article to be coated, and a step of curing the coating composition at a temperature of 150°C or higher and 270°C or lower.

As a means for applying the coating composition of the present disclosure to an article to be coated, conventionally known means such as a roll coater, an airless spray, an electrostatic spray, and a curtain flow coater can be employed.

The coating film of the present invention can be formed by applying a coating composition to an article such as a steel plate to be coated and then performing a baking treatment of heating the article. The baking temperature (the maximum temperature reached by an article such as a steel plate to be coated) is, for example, 150°C or higher and 270°C or lower. By curing the coating composition of the present disclosure at such a temperature, a coating film is formed with sufficient strength. By virtue of a coating film with sufficient strength to be formed, a superior corrosion-resistant property is exhibited for a longer period, and further a coating film with superior moisture resistance is formed.

The baking time (curing time) is, for example, 10 to 200 seconds. For example, in the case of forming a multi-layer coating film consisting of two layers, namely, an undercoating film and a topcoating film, possible methods comprise applying an undercoating composition, followed by baking treatment, then applying a topcoating composition, and then baking the topcoating film, and another possible method comprises applying an undercoating composition, followed by applying a topcoating composition wet-on-wet without baking the undercoating composition, and then baking both of the compositions simultaneously.

The film thickness (dry film thickness) of the coating film of the present invention is usually 1 to 30 um, and for example, in the case of a topcoating film, it is preferably 10 to 30 µm.

### [About corrosion resistance]

The coating film formed from the coating composition of the present disclosure shows superior results in both "immersion-drying cycle test using acidic salt water, 15 cycles" and "CCHC test, 2,000 hours", for example. When superior results are shown in these tests, both a long-term stable corrosion-resistant property and moisture resistance are achieved.

In the "immersion-drying cycle test using acidic salt water", the measurement can be performed based on the method disclosed in Japanese Patent No. 5857156. It is considered, for example, that a coating film having both a corrosion-resistant property under acidic environmental conditions and a long-term stable corrosion-resistant property are obtained when they exhibit superior test results.

The "CCHC test, 2,000 hours" is an evaluation test relating to blistering of a coated film in which evaluation is performed by exposing a coating film for 2,000 hours to a high temperature and high humidity environment that is called CCHC (Cleveland Condensing Humidity Cabinet: ASTM D-2247-87-Type A2).

Further, it is considered that the coating film of the present disclosure can be evaluated to maintain its superior moisture resistance for a long period even if the coating film is exposed to a harsher environment since the test time is 2,000 hours.

The coating composition of the present disclosure shows superior results in such a plurality of tests and forms a coating film having both a long-term stable corrosion-resistant property and moisture resistance.

In addition, it achieves both a superior corrosion-resistant property and superior moisture resistance also in a processed part, an edge face, a crosscut part, and the like.

Further, the rusting is suppressed that may be caused by acid rain or the like.

In the present disclosure, the corrosion-resistant property under acidic environmental conditions can be evaluated based on a test using "acidic salt water". Further, in the present disclosure, a coating film having a superior corrosion-resistant property under acidic environmental conditions is obtained, and for example, it exhibits a superior corrosion-resistant property against acid rain.

### EXAMPLES

The present invention will be described more specifically with reference to the following examples, and the present invention is not limited to the examples. In the examples, "parts" and "%" are on a mass basis unless otherwise indicated.

### [Magnesium hydroxide]

The conditions and characteristic values about the magnesium hydroxides (C1) to (C7) used in Examples and Comparative Examples are shown in Tables 1A to 1B.

**[Table 1A]**

| Magnesium hydroxide (C) | Magnesium hydroxide (C1) | Magnesium hydroxide (C2) |
|---|---|---|
| Raw material Commercial product name | MAGSEEDS EP-1 | MAGSEEDS EP-3 |
| Manufacturer | Konoshima Chemical Co., Ltd. | Konoshima Chemical Co., Ltd. |
| BET specific surface area (m²/g) | 1.8 | 1.0 |
| Oil absorption (g/100g) | 59 | 42 |
| Average particle diameter (µm) | 3.2 | 5.7 |
| Conductivity (µS/cm) of aqueous solution prepared by adding 1 g of (C) to 100 g of purified water | 50 | 91 |
| pH of aqueous solution prepared by adding 1 g of (C) to 100 g of purified water | 10.0 | 10.2 |

**[Table 1B]**

| Magnesium hydroxide (C') | Magnesium hydroxide (C3) | Magnesium hydroxide (C4) | Magnesium hydroxide (C5) | Magnesium hydroxide (C6) | Magnesium hydroxide (C7) |
|---|---|---|---|---|---|
| Raw material Commercial product name | MAGSEEDS X-6 | Kyowa Suimag F | MAGSEEDS WH-4 | MAGSEEDS S-6 | MAGSEEDS EP-1A |
| Manufacturer | Konoshima Chemical Co., Ltd. | Kyowa Chemical Industry Co., Ltd. | Konoshima Chemical Co., Ltd. | Konoshima Chemical Co., Ltd. | Konoshima Chemical Co., Ltd. |
| BET specific surface area (m²/c) | 7.0 | 50.0 | 7.3 | 4.4 | 3.7 |
| Oil absorption (g/100g) | 77 | 119 | 51 | 43 | 80 |
| Average particle diameter (µm) | 0.9 | 8.0 | 3.3 | 1.0 | 2.9 |
| Conductivity (µS/cm) of aqueous solution prepared by adding 1 g of (C') to 100 of purified water | 114 | 180 | 144 | 88 | 43 |
| pH of aqueous solution prepared by adding 1 g of (C') to 100 g of purified water | 10.5 | 10.6 | 10.7 | 10.7 | 10.4 |

### [Preparation of coating film-forming resin (A1) (ester-based urethane resin 1)]

In a reaction vessel equipped with a thermometer, a reflux condenser and a stirrer, 55 parts by mass of adipic acid, 6.1 parts by mass of phthalic anhydride, 27 parts by mass of neopentyl glycol and 26.1 parts by mass of propylene glycol were mixed and the temperature was gradually raised up to 230°C in a nitrogen stream. An esterification reaction was carried out for about 10 hours until the acid value became 1 or less (dehydrated amount: 14.2 parts by mass) while the water generated was distilled off. Then, the temperature of the reaction vessel was lowered to 50°C, and then 135 parts by mass of cyclohexanone and 35 parts by mass of 4,4'-diphenylmethane diisocyanate were mixed and held at 80°C for 8 hours to react, and thus an ester-based urethane resin 1 (solid concentration: 50% by mass) was obtained.

Coating film-forming resins (A2) to (A8) (ester-based urethane resins 2 to 8, respectively) were prepared in the same manner as above except that the monomer types and amounts were changed as shown in Tables 2A and 2B. The monomer composition and characteristic values such as molecular weight of each resin are shown in Tables 2A and 2B.

**[Table 2A]**

| | Coating film-forming resin (A1) | Coating film-forming resin (A2) | Coating film-forming resin (A3) | Coating film-forming resin (A4) |
|---|---|---|---|---|
| | Ester-based urethane resin 1 | Ester-based urethane resin 2 | Ester-based urethane resin 3 | Ester-based urethane resin 4 |
| Adipic acid | 55.0 | 34.5 | 55.0 | 55.0 |
| Phthalic anhydride | 6.1 | 34.5 | 6.1 | 6.1 |
| Neopentyl glycol | 27.0 | 22.1 | 27.0 | 27.0 |
| Propylene glycol | 26.1 | 21.4 | 26.1 | 26.1 |
| Dehydration amount | -14.2 | -12.5 | -14.2 | -14.2 |
| Subtotal | 100.0 | 100.0 | 100.0 | 100.0 |
| Cyclohexanone | 135.0 | 135.0 | 135.0 | 135.0 |
| 4,4'-Diphenylmethane diisocyanate | 35.0 | | 35.0 | 35.0 |
| Hexamethylene diisocyanate | | 35.0 | | |
| Trimellitic anhydride | | | 4.3 | 7.3 |
| Grand total | 270.0 | 270.0 | 274.3 | 277.3 |
| Number-average molecular weight (Mn) | 9,000 | 9,000 | 9,000 | 9,000 |
| Solid acid value (mg KOH/g) | 1 | 3 | 18 | 30 |
| Glass transition temperature (°C) | -20 | -5 | 0 | 6 |

**[Table 2B]**

| | Coating film-forming resin (A5) | Coating film-forming resin (A6) | Coating film-forming resin (A7) | Coating film-forming resin (A8) |
|---|---|---|---|---|
| | Ester-based urethane resin 5 | Ester-based urethane resin 6 | Ester-based urethane resin 7 | Ester-based urethane resin 8 |
| Adipic acid | 55.0 | 55.0 | 55.0 | 55.0 |
| Phthalic anhydride | 6.1 | 6.1 | 6.1 | 6.1 |
| Neopentyl glycol | 27.0 | 27.0 | 27.0 | 27.0 |
| Propylene glycol | 26.1 | 26.1 | 26.1 | 26.1 |
| Dehydration amount | -14.2 | -14.2 | -14.2 | -14.2 |
| Subtotal | 100.0 | 100.0 | 100.0 | 100.0 |
| Cyclohexanone | 130.0 | 133.0 | 141.0 | 145.0 |
| 4,4'-Diphenylmethane diisocyanate | 30.0 | 33.0 | 41.0 | 45.0 |
| Hexamethylene diisocyanate | | | | |
| Trimellitic anhydride | | | | |
| Grand total | 260.0 | 266.0 | 282.0 | 290.0 |
| Number-average molecular weight (Mn) | 1,000 | 3,000 | 19,000 | 23,000 |
| Solid acid value (mg KOH/g) | 1 | 1 | 1 | 1 |
| Glass transition temperature (°C) | -25 | -22 | -15 | -10 |

### [Preparation of coating film-forming resin (A9) (ether-based urethane resin 1)]

In a reaction vessel equipped with a thermometer, a reflux condenser and a stirrer, 100 parts by mass of PTMG650 (polytetramethylene glycol manufactured by Mitsubishi Chemical Corporation), 135 parts by mass of cyclohexanone and 35 parts by mass of 4,4'-diphenylmethane diisocyanate were mixed and held at 80°C for 8 hours to react, and thus an ether-based urethane resin 1 (solid concentration: 50% by mass) was obtained.

### [Preparation of coating film-forming resin (A10) (carbonate-based urethane resin 1)]

In a reaction vessel equipped with a thermometer, a reflux condenser and a stirrer, 100 parts by mass of DURANOL T5650E (polycarbonate diol manufactured by Asahi Kasei Corporation), 135 parts by mass of cyclohexanone and 35 parts by mass of 4,4'-diphenylmethane diisocyanate were mixed and held at 80°C for 8 hours to react, and thus a carbonate-based urethane resin 1 (solid concentration: 50% by mass) was obtained.

The monomer compositions and characteristic values such as molecular weight of the coating film-forming resins (A9) and (A10) are shown in Table 2C.

**[Table 2C]**

| | Coating film-forming resin (A9) | Coating film-forming resin (A10) |
|---|---|---|
| | Ether-based urethane resin 1 | Carbonate-based urethane resin 1 |
| PTMG-650 | 100.0 | |
| DURANOL T5650E | | 100.0 |
| Cyclohexanone | 135.0 | 135.0 |
| 4,4'-Diphenylmethane diisocyanate | 35.0 | 35.0 |
| Hexamethylene diisocyanate | | |
| Trimellitic anhydride | | |
| Grand total | 270.0 | 270.0 |
| Number-average molecular weight (Mn) | 9,000 | 9,000 |
| Solid acid value (mg KOH/g) | 0 | 0 |
| Glass transition temperature (°C) | -20 | -15 |

### [Coating film-forming resins (A11) to (A13)]

In addition to the above, the details of the coating film-forming resins (A) used in Examples and Comparative Examples are as follows.
- Coating film-forming resin (A11) (epoxy resin 1); E1255HX30 (manufactured by Mitsubishi Chemical Corporation, hydroxy group-containing epoxy resin), number-average molecular weight: 10,000, solid acid value: 1.0 mg KOH/g, glass transition temperature: 85°C, solid concentration: 30% by mass
- Coating film-forming resin (A12) (polyester resin 1); BECKOLITE M-6902-50 (manufactured by DIC Corporation), number-average molecular weight: 12,000, solid acid value: 7.5 mg KOH/g, glass transition temperature: 26°C, solid concentration: 50% by mass
- Coating film-forming resin (A13) (acrylic resin 1); ACRYDIC A452 (manufactured by DIC Corporation), number-average molecular weight: 17,000, solid acid value: 2.7 mg KOH/g, glass transition temperature: 70°C, solid concentration: 40% by mass

### [Crosslinking agents (B1), (B2)]

The details of the crosslinking agent (B) are as follows.
- Crosslinking agent (B1) (polyisocyanate compound 1); Desmodur BL3575 (manufactured by Sumika Covestro Urethane Co., Ltd., blocked polyisocyanate), blocked body of hexamethylene diisocyanate (HDI) (isocyanurate type, blocking agent: dimethylpyrazole), isocyanate group content: 10.5% by mass, solid concentration: 75% by mass
- Crosslinking agent (B2) (amino resin); MYCOAT 715 (made by Allnex Japan Inc., imino group-type melamine resin), solid concentration: 80% by mass

Details of other components are as follows.
- Solvent 1; cyclohexanone (manufactured by Shoei Chemical Co., Ltd.)
- Solvent 2; Solvesso 150 (manufactured by Shell Chemicals)
- Curing catalyst; TVS KS-1260 (manufactured by Kyodo Chemical Co., Ltd., dibutyltin dilaurate), non-volatile content: 100% by mass
- Aluminum hydroxide; Higilite H32 (manufactured by Showa Denko K.K.), oil absorption: 20 g/100 g, BET specific surface area: 2.0 m²/g
- Calcium vanadate; LF BOUSEI CRF-318 (manufactured by Kikuchi Color & Chemicals Corporation)
- Tricalcium phosphate; Tricalcium phosphate (manufactured by Taihei Chemical Industrial Co., Ltd.)
- Condensed phosphate; K-WHITE # 82 (manufactured by TAYCA Corporation, aluminum dihydrogen tripolyphosphate)
- Magnesium oxide; magnesium oxide RF-10CS (manufactured by Ube Material Industries, Ltd.)

### (Example 1)

Mixed were 142.9 parts by mass of the coating film-forming resin (A1), 45.0 parts by mass of cyclohexanone, 45.0 parts by mass of Solvesso 150 and 60 parts by mass of the magnesium hydroxide (C1), and the mixture was dispersed with a sand mill (dispersion medium: glass beads) until the maximum particle diameter of pigment coarse particles reached 10 um or less, and thus, dispersion composition 1 was prepared. To the obtained dispersion composition 1, 38.1 parts by mass of the crosslinking agent (B1) (Desmodur BL-3575) and 0.5 parts by mass of KS1260 (manufactured by Kyodo Chemical Co., Ltd.) as a curing catalyst were added, and the mixture was uniformly mixed with a disper, and thus, coating composition 1 was prepared. Details of the composition of Example 1 are shown in Table 3A.

### (Examples 2 to 31, Comparative Examples 1 to 10)

The coating compositions were prepared in the same manner as in Example 1 except that the types and amounts of each components were changed as shown in Tables 3A to 3H and Tables 4A to 4C.

**[Table 3A]**

| | | Details of coating film-forming resin | Example 1 | Example 2 | Example 3 | Example 4 |
|---|---|---|---|---|---|---|
| Magnesium hydroxide (C) | Magnesium hydroxide (C1) | | 60.0 | | 60.0 | 60.0 |
| | Magnesium hydroxide (C2) | | | 60.0 | | |
| Coating film-forming resin (A) | Coating film-forming resin (A1) | Ester-based urethane resin 1 | 142.9 | 142.9 | | |
| | Coating film-forming resin (A2) | Ester-based urethane resin 2 | | | | |
| | Coating film-forming resin (A3) | Ester-based urethane resin 3 | | | | |
| | Coating film-forming resin (A4) | Ester-based urethane resin 4 | | | | |
| | Coating film-forming resin (A5) | Ester-based urethane resin 5 | | | 142.9 | |
| | Coating film-forming resin (A6) | Ester-based urethane resin 6 | | | | 142.9 |
| | Coating film-forming resin (A7) | Ester-based urethane resin 7 | | | | |
| | Coating film-forming resin (A8) | Ester-based urethane resin 8 | | | | |
| | Coating film-forming resin (A9) | Ether-based urethane resin 1 | | | | |
| | Coating film-forming resin (A10) | Carbonate-based urethane resin 1 | | | | |
| | Coating film-forming resin (A11) | Epoxy resin 1 | | | | |
| | Coating film-forming resin (A12) | Polyester resin 1 | | | | |
| | Coating film-forming resin (A13) | Acrylic resin 1 | | | | |
| Solvent | Cyclohexanone | | 45.0 | 45.0 | 45.0 | 45.0 |
| | Solvesso 150 | | 45.0 | 45.0 | 45.0 | 45.0 |
| Crosslinking agent (B) | Crosslinking agent (B1) | | 38.1 | 38.1 | 38.1 | 38.1 |
| | Crosslinking agent (B2) | | | | | |
| Catalyst | KS-1260 | | 0.5 | 0.5 | 0.5 | 0.5 |
| Total | | | 331.5 | 331.5 | 331.5 | 331.5 |

**[Table 3B]**

| | | Details of coating film-forming resin | Example 5 | Example 6 | Example 7 | Example 8 |
|---|---|---|---|---|---|---|
| Magnesium hydroxide (C) | Magnesium hydroxide (C1) | | 60.0 | 60.0 | 60.0 | 60.0 |
| | Magnesium hydroxide (C2) | | | | | |
| Coating film-forming resin (A) | Coating film-forming resin (A1) | Ester-based urethane resin 1 | | | | |
| | Coating film-forming resin (A2) | Ester-based urethane resin 2 | | | 142.9 | |
| | Coating film-forming resin (A3) | Ester-based urethane resin 3 | | | | 142.9 |
| | Coating film-forming resin (A4) | Ester-based urethane resin 4 | | | | |
| | Coating film-forming resin (A5) | Ester-based urethane resin 5 | | | | |
| | Coating film-forming resin (A6) | Ester-based urethane resin 6 | | | | |
| | Coating film-forming resin (A7) | Ester-based urethane resin 7 | 142.9 | | | |
| | Coating film-forming resin (A8) | Ester-based urethane resin 8 | | 142.9 | | |
| | Coating film-forming resin (A9) | Ether-based urethane resin 1 | | | | |
| | Coating film-forming resin (A10) | Carbonate-based urethane resin 1 | | | | |
| | Coating film-forming resin (A11) | Epoxy resin 1 | | | | |
| | Coating film-forming resin (A12) | Polyester resin 1 | | | | |
| | Coating film-forming resin (A13) | Acrylic resin 1 | | | | |
| Solvent | Cyclohexanone | | 45.0 | 45.0 | 45.0 | 45.0 |
| | Solvesso 150 | | 45.0 | 45.0 | 45.0 | 45.0 |
| Crosslinking agent (B) | Crosslinking agent (B1) | | 38.1 | 38.1 | 38.1 | 38.1 |
| | Crosslinking agent (B2) | | | | | |
| Catalyst | KS-1260 | | 0.5 | 0.5 | 0.5 | 0.5 |
| Total | | | 331.5 | 331.5 | 331.5 | 331.5 |

**[Table 3C]**

| | | Details of coating film-forming resin | Example 9 | Example 10 | Example 11 | Example 12 |
|---|---|---|---|---|---|---|
| Magnesium hydroxide (C) | Magnesium hydroxide (C1) | | 60.0 | 60.0 | 60.0 | 60.0 |
| | Magnesium hydroxide (C2) | | | | | |
| Coating film-forming resin (A) | Coating film-forming resin (A1) | Ester-based urethane resin 1 | | 194.2 | 188.7 | 105.3 |
| | Coating film-forming resin (A2) | Ester-based urethane resin 2 | | | | |
| | Coating film-forming resin (A3) | Ester-based urethane resin 3 | | | | |
| | Coating film-forming resin (A4) | Ester-based urethane resin 4 | 142.9 | | | |
| | Coating film-forming resin (A5) | Ester-based urethane resin 5 | | | | |
| | Coating film-forming resin (A6) | Ester-based urethane resin 6 | | | | |
| | Coating film-forming resin (A7) | Ester-based urethane resin 7 | | | | |
| | Coating film-forming resin (A8) | Ester-based urethane resin 8 | | | | |
| | Coating film-forming resin (A9) | Ether-based urethane resin 1 | | | | |
| | Coating film-forming resin (A10) | Carbonate-based urethane resin 1 | | | | |
| | Coating film-forming resin (A11) | Epoxy resin 1 | | | | |
| | Coating film-forming resin (A12) | Polyester resin 1 | | | | |
| | Coating film-forming resin (A13) | Acrylic resin 1 | | | | |
| Solvent | Cyclohexanone | | 45.0 | 45.0 | 45.0 | 45.0 |
| | Solvesso 150 | | 45.0 | 45.0 | 45.0 | 45.0 |
| Crosslinking agent (B) | Crosslinking agent (B1) | | 38.1 | 3.9 | 7.5 | 63.2 |
| | Crosslinking agent (B2) | | | | | |
| Catalyst | KS-1260 | | 0.5 | 0.5 | 0.5 | 0.5 |
| Total | | | 331.5 | 348.6 | 346.7 | 319.0 |

**[Table 3D]**

| | | Details of coating film-forming resin | Example 13 | Example 14 | Example 15 | Example 16 |
|---|---|---|---|---|---|---|
| Magnesium hydroxide (C) | Magnesium hydroxide (C1) | | 60.0 | 60.0 | 60.0 | 60.0 |
| | Magnesium hydroxide (C2) | | | | | |
| Coating film-forming resin (A) | Coating film-forming resin (A1) | Ester-based urethane resin 1 | 90.9 | | | |
| | Coating film-forming resin (A2) | Ester-based urethane resin 2 | | | | |
| | Coating film-forming resin (A3) | Ester-based urethane resin 3 | | | | |
| | Coating film-forming resin (A4) | Ester-based urethane resin 4 | | | | |
| | Coating film-forming resin (A5) | Ester-based urethane resin 5 | | | | |
| | Coating film-forming resin (A6) | Ester-based urethane resin 6 | | | | |
| | Coating film-forming resin (A7) | Ester-based urethane resin 7 | | | | |
| | Coating film-forming resin (A8) | Ester-based urethane resin 8 | | | | |
| | Coating film-forming resin (A9) | Ether-based urethane resin 1 | | | | 142.9 |
| | Coating film-forming resin (A10) | Carbonate-based urethane resin 1 | | | | |
| | Coating film-forming resin (A11) | Epoxy resin 1 | | | 238.1 | |
| | Coating film-forming resin (A12) | Polyester resin 1 | | 142.9 | | |
| | Coating film-forming resin (A13) | Acrylic resin 1 | | | | |
| Solvent | Cyclohexanone | | 45.0 | 62.9 | 10.0 | 45.0 |
| | Solvesso 150 | | 45.0 | 62.9 | 10.0 | 45.0 |
| Crosslinking agent (B) | Crosslinking agent (B1) | | 72.7 | 38.1 | 38.1 | 38.1 |
| | Crosslinking agent (B2) | | | | | |
| Catalyst | KS-1260 | | 0.5 | 0.5 | 0.5 | 0.5 |
| Total | | | 314.1 | \| 367.3 | 356.7 | 331.5 |

**[Table 3E]**

| | | Details of coating film-forming resin | Example 17 | Example 18 | Example 19 | Example 20 |
|---|---|---|---|---|---|---|
| Magnesium hydroxide (C) | Magnesium hydroxide (C1) | | 60.0 | 60.0 | 60.0 | 60.0 |
| | Magnesium hydroxide (C2) | | | | | |
| Coating film-formating resin (A) | Coating film-forming resin (A1) | Ester-based urethane resin 1 | | | 142.9 | 194.2 |
| | Coating film-forming resin (A2) | Ester-based urethane resin 2 | | | | |
| | Coating film-forming resin (A3) | Ester-based urethane resin 3 | | | | |
| | Coating film-forming resin (A4) | Ester-based urethane resin 4 | | | | |
| | Coating film-forming resin (A5) | Ester-based urethane resin 5 | | | | |
| | Coating film-forming resin (A6) | Ester-based urethane resin 6 | | | | |
| | Coating film-forming resin (A7) | Ester-based urethane resin 7 | | | | |
| | Coating film-forming resin (A8) | Ester-based urethane resin 8 | | | | |
| | Coating film-forming resin (A9) | Ether-based urethane resin 1 | | | | |
| | Coating film-forming resin (A10) | Carbonate-based urethane resin 1 | 142.9 | | | |
| | Coating film-forming resin (A11) | Epoxy resin 1 | | | | |
| | Coating film-forming resin (A12) | Polyester resin 1 | | | | |
| | Coating film-forming resin (A13) | Acrylic resin 1 | | 178.6 | | |
| Solvent | Cyclohexanone | | 45.0 | 30.0 | 45.0 | 45.0 |
| | Solvesso 150 | | 45.0 | 30.0 | 45.0 | 45.0 |
| Crosslinking agent (B) | Crosslinking agent (B1) | | 38.1 | 38.1 | | |
| | Crosslinking agent (B2) | | | | 35.7 | 3.6 |
| Catalyst | KS-1260 | | 0.5 | 0.5 | | |
| Total | | | 331.5 | 337.2 | 328.6 | 347.8 |

**[Table 3F]**

| | | Details of coating film-forming resin | Example 21 | Example 22 | Example 23 | Example 24 |
|---|---|---|---|---|---|---|
| Magnesium hydroxide (C) | Magnesium hydroxide (C1) | | 60.0 | 60.0 | 60.0 | 60.0 |
| | Magnesium hydroxide (C2) | | | | | |
| Coating film-forming resin (A) | Coating film-forming resin (A1) | Ester-based urethane resin 1 | 188.7 | 105.3 | 90.9 | |
| | Coating film-forming resin (A2) | Ester-based urethane resin 2 | | | | |
| | Coating film-forming resin (A3) | Ester-based urethane resin 3 | | | | |
| | Coating film-forming resin (A4) | Ester-based urethane resin 4 | | | | |
| | Coating film-forming resin (A5) | Ester-based urethane resin 5 | | | | |
| | Coating film-forming resin (A6) | Ester-based urethane resin 6 | | | | |
| | Coating film-forming resin (A7) | Ester-based urethane resin 7 | | | | |
| | Coating film-forming resin (A8) | Ester-based urethane resin 8 | | | | |
| | Coating film-forming resin (A9) | Ether-based urethane resin 1 | | | | |
| | Coating film-forming resin (A10) | Carbonate-based urethane resin 1 | | | | |
| | Coating film-forming resin (A11) | Epoxy resin 1 | | | | |
| | Coating film-forming resin (A12) | Polyester resin 1 | | | | 142.9 |
| | Coating film-forming resin (A13) | Acrylic resin 1 | | | | |
| Solvent | Cyclohexanone | | 45.0 | 45.0 | 45.0 | 62.9 |
| | Solvesso 150 | | 45.0 | 45.0 | 45.0 | 62.9 |
| Crosslinking agent (B) | Crosslinking agent (B1) | | | | | |
| | Crosslinking agent (B2) | | 7.1 | 59.2 | 68.2 | 35.7 |
| Catalyst | KS-1260 | | | | | |
| Total | | | 345.8 | 314.5 | 309.11 | 364.4 |

**[Table 3G]**

| | | Details of coating film-forming resin | Example 25 | Example 26 | Example 27 | Example 28 |
|---|---|---|---|---|---|---|
| Magnesium hydroxide (C) | Magnesium hydroxide (C1) | | 60.0 | 60.0 | 60.0 | 60.0 |
| | Magnesium hydroxide (C2) | | | | | |
| Coating film-forming resin (A) | Coating film-forming resin (A1) | Ester-based urethane resin 1 | | | | 142.9 |
| | Coating film-forming resin (A2) | Ester-based urethane resin 2 | | | | |
| | Coating film-forming resin (A3) | Ester-based urethane resin 3 | | | | |
| | Coating film-forming resin (A4) | Ester-based urethane resin 4 | | | | |
| | Coating film-forming resin (A5) | Ester-based urethane resin 5 | | | | |
| | Coating film-forming resin (A6) | Ester-based urethane resin 6 | | | | |
| | Coating film-forming resin (A7) | Ester-based urethane resin 7 | | | | |
| | Coating film-forming resin (A8) | Ester-based urethane resin 8 | | | | |
| | Coating film-forming resin (A9) | Ether-based urethane resin 1 | 142.9 | | | |
| | Coating film-forming resin (A10) | Carbonate-based urethane resin 1 | | 142.9 | | |
| | Coating film-forming resin (A11) | Epoxy resin 1 | | | | |
| | Coating film-forming resin (A12) | Polyester resin 1 | | | | |
| | Coating film-forming resin (A13) | Acrylic resin 1 | | | 178.6 | |
| Solvent | Cyclohexanone | | 45.0 | 45.0 | 30.0 | 5.0 |
| | Solvesso 150 | | 45.0 | 45.0 | 30.0 | 5.0 |
| Crosslinking agent (B) | Crosslinking agent (B1) | | | | | 38.1 |
| | Crosslinking agent (B2) | | 35.7 | 35.7 | 35.7 | |
| Catalyst | KS-1260 | | | | | 0.5 |
| Total | | | 328.6 | 328.6 | 334.3 | 211.5 |

**[Table 3H]**

| | | Details of coating film-forming resin | Example 29 | Example 30 | Example 31 |
|---|---|---|---|---|---|
| Magnesium hydroxide (C) | Magnesium hydroxide (C1) | | 3.0 | 140.0 | 160.0 |
| | Magnesium hydroxide (C2) | | | | |
| Coating film-forming resin (A) | Coating film-forming resin (A1) | Ester-based urethane resin 1 | 142.9 | 142.9 | 142.9 |
| | Coating film-forming resin (A2) | Ester-based urethane resin 2 | | | |
| | Coating film-forming resin (A3) | Ester-based urethane resin 3 | | | |
| | Coating film-forming resin (A4) | Ester-based urethane resin 4 | | | |
| | Coating film-forming resin (A5) | Ester-based urethane resin 5 | | | |
| | Coating film-forming resin (A6) | Ester-based urethane resin 6 | | | |
| | Coating film-forming resin (A7) | Ester-based urethane resin 7 | | | |
| | Coating film-forming resin (A8) | Ester-based urethane resin 8 | | | |
| | Coating film-forming resin (A9) | Ether-based urethane resin 1 | | | |
| | Coating film-forming resin (A10) | Carbonate-based urethane resin 1 | | | |
| | Coating film-forming resin (A11) | Epoxy resin 1 | | | |
| | Coating film-forming resin (A12) | Polyester resin 1 | | | |
| | Coating film-forming resin (A13) | Acrylic resin 1 | | | |
| Solvent | Cyclohexanone | | 5.0 | 80.0 | 90.0 |
| | Solvesso 150 | | 5.0 | 80.0 | 90.0 |
| Crosslinking agent (B) | Crosslinking agent (B1) | | 38.1 | 38.1 | 38.1 |
| | Crosslinking agent (B2) | | | | |
| Catalyst | KS-1260 | | 0.5 | 0.5 | 0.5 |
| Total | | | 194.5 | 481.5 | 521.5 |

**[Table 4A]**

| | | Comparative Example 1 | Comparative Example 2 | Comparative Example 3 | Comparative Example 4 |
|---|---|---|---|---|---|
| Magnesium hydroxide (C') and other materials | Magnesium hydroxide (C3) | 60.0 | | | |
| | Magnesium hydroxide (C4) | | 60.0 | | |
| | Magnesium hydroxide (C5) | | | 60.0 | |
| | Magnesium hydroxide (C6) | | | | 60.0 |
| | Magnesium hydroxide (C7) | | | | |
| | Aluminum hydroxide | | | | |
| | Calcium vanadate | | | | |
| | Calcium phosphate hydroxide | | | | |
| | Condensed phosphate | | | | |
| | Magnesium oxide | | | | |
| Coating film-forming resin | Coating film-forming resin (A1) | 142.9 | 142.9 | 142.9 | 142.9 |
| | Ester-based urethane resin 1 | | | | |
| Solvent | Cyclohexanone | 45.0 | 45.0 | 45.0 | 45.0 |
| | Solvesso 150 | 45.0 | 45.0 | 45.0 | 45.0 |
| Crosslinking agent | Crosslinking agent (B1) | 38.1 | 38.1 | 38.1 | 38.1 |
| Catalyst | KS-1260 | 0.5 | 0.5 | 0.5 | 0.5 |
| Total | | 331.5 | 331.5 | 331.5 | 331.5 |

**[Table 4B]**

| | | Comparative Example 5 | Comparative Example 6 | Comparative Example 7 | Comparative Example 8 |
|---|---|---|---|---|---|
| Magnesium hydroxide (C') and other materials | Magnesium hydroxide (C3) | | | | |
| | Magnesium hydroxide (C4) | | | | |
| | Magnesium hydroxide (C5) | | | | |
| | Magnesium hydroxide (C6) | | | | |
| | Magnesium hydroxide (C7) | 60.0 | | | |
| | Aluminum hydroxide | | 60.0 | | |
| | Calcium vanadate | | | 60.0 | |
| | Calcium phosphate hydroxide | | | | 60.0 |
| | Condensed phosphate | | | | |
| | Magnesium oxide | | | | |
| Coating film-forming resin | Coating film-forming resin (A1) | 142.9 | 142.9 | 142.9 | 142.9 |
| | Ester-based urethane resin 1 | | | | |
| Solvent | Cyclohexanone | 45.0 | 45.0 | 45.0 | 45.0 |
| | Solvesso 150 | 45.0 | 45.0 | 45.0 | 45.0 |
| Crosslinking agent | Crosslinking agent (B1) | 38.1 | 38.1 | 38.1 | 38.1 |
| Catalyst | KS-1260 | 0.5 | 0.5 | 0.5 | 0.5 |
| Total | | 331.5 | 331.5 | 331.5 | 331.5 |

**[Table 4C]**

| | | Comparative Example 9 | Comparative Example 10 | Reference Example 1 |
|---|---|---|---|---|
| Magnesium hydroxide (C') and other materials | Magnesium hydroxide (C3) | | | Nippe Supercoat 667 Primer |
| | Magnesium hydroxide (C4) | | | |
| | Magnesium hydroxide (C5) | | | |
| | Magnesium hydroxide (C6) | | | |
| | Magnesium hydroxide (C7) | | | |
| | Aluminum hydroxide | | | |
| | Calcium vanadate | | | |
| | Calcium phosphate hydroxide | | | |
| | Condensed phosphate | 60.0 | | |
| | Magnesium oxide | | 60.0 | |
| Coating film-forming resin | Coating film-forming resin (A1) | 142.9 | 142.9 | |
| | Ester-based urethane resin 1 | | | |
| Solvent | Cyclohexanone | 45.0 | 45.0 | |
| | Solvesso 150 | 45.0 | 45.0 | |
| Crosslinking agent | Crosslinking agent (B1) | 38.1 | 38.1 | |
| Catalyst | KS-1260 | 0.5 | 0.5 | |
| Total | | 331.5 | 331.5 | |

### [Method of preparing coated plate for evaluation]

A 0.4 mm thick aluminum-zinc plated steel plate was alkali-degreased, and then subjected to non-chromium chemical conversion treatment by applying a phosphoric acid treatment agent, SURFCOAT EC2310 (manufactured by Nippon Paint Surf Chemicals Co., Ltd.) to the front and back surfaces of the steel plate, followed by drying.

Next, the coating composition 1 obtained above was applied to the back surface of the obtained treated steel plate such that the dry coating film was 7 um in the thickness, and baked at a maximum temperature of 180°C for 30 seconds, and thus a back coating film was formed.

Meanwhile, one of the coating compositions of Examples 1 to 31 and Comparative Examples 1 to 10 was applied to the front surface of the treated steel plate such that the dry coating film was 5 um in the thickness, and baked at a maximum temperature of 200°C for 30 seconds, and thus a front undercoating film was formed. Furthermore, Nippe Supercoat 300HQ (manufactured by Nippon Paint Industrial Coatings Co., Ltd.; polyester-based topcoat paint) was applied as a topcoating material on the above front undercoating film such that the dry coating film was 10 um in the thickness, and baked at a maximum temperature of 210°C for 40 seconds to form a front topcoating film, and thus a coated steel plate for evaluation was obtained.

### (Reference Example 1)

NRC300 (manufactured by Nippon Paint Surf Chemicals Co., Ltd.), which is a chromate-based treatment agent, was applied to the front and back surfaces of a steel plate instead of the phosphoric acid treatment agent (SURFCOAT EC2310) used in the method of the preparation of the coated sheet for evaluation, to perform chromate treatment, followed by drying. Nippe Supercoat 667 Primer (manufactured by Nippon Paint Industrial Coatings Co., Ltd.; strontium chromate-based undercoating material) was applied to the front and back surfaces of the obtained treated steel plate such that the dry coating film was 3 um in the thickness, and baked at a maximum temperature of 200°C for 30 seconds, and thus a front and back undercoating films were formed. Furthermore, Nippe Supercoat 300HQ (manufactured by Nippon Paint Industrial Coatings Co., Ltd.; polyester-based topcoat paint) was applied as a topcoating material such that the dry coating film was 10 um in thickness, and baked at a maximum temperature of 210°C for 40 seconds, and thus a coated steel plate for evaluation was obtained. The conditions are shown in Table 4C.

The evaluation results of the coating compositions and the coated steel plates for evaluation prepared in Examples, Comparative Examples and Reference Example are shown in Tables 5A to 5H and 6A to 6C.

**[Table 5A]**

| | | Example 1 | Example 2 | Example 3 | Example 4 |
|---|---|---|---|---|---|
| Magnesium hydroxide (C) | | (C1) | (C2) | (C1) | (C1) |
| Coating film-forming resin (A) | Type | (A1) | (A1) | (A5) | (A6) |
| | | Ester-based urethane resin 1 | Ester-based urethane resin 1 | Ester-based urethane resin 5 | Ester-based urethane resin 6 |
| Crosslinking agent (B) | | (B1) | (B1) | (B1) | (B1) |
| Part(s) by mass (solid content) of crosslinking agent (B) relative to 100 parts by mass of coating film-forming resin (A) | | 40 | 40 | 40 | 40 |
| Part(s) by mass (solid content) of magnesium hydroxide (C) relative to 100 parts by mass in total of coating film-forming resin (A) and crosslinking agent (B) | | 60 | 60 | 60 | 60 |
| Storage stability test | | 5 | 5 | 5 | 5 |
| Boiling water resistance test | | 10 | 10 | 10 | 10 |
| Moisture resistance test (CCHC test) | | 10 | 10 | 8F | 10 |
| Corrosion resistance test | 4T folded part | 5 | 5 | 5 | 5 |
| | Edge part | 5 | 5 | 5 | 5 |
| | Crosscut part | 5 | 5 | 5 | 5 |
| Alkali resistance test | | 10 | 10 | 8F | 10 |
| Acid resistance test | | 10 | 10 | 8F | 10 |
| Immersion-drying cycle test using acidic salt water | 4T folded part | 5 | 5 | 5 | 5 |
| | Edge part | 5 | 5 | 5 | 5 |
| | Crosscut part | 5 | 5 | 5 | 5 |

**[Table 5B]**

| | | Example 5 | Example 6 | Example 7 | Example 8 |
|---|---|---|---|---|---|
| Magnesium hydroxide (C) | | (C1) | (C1) | (C1) | (C1) |
| Coating film-forming resin (A) | Type | (A7) | (A8) | (A2) | (A3) |
| | | Ester-based urethane resin 7 | Ester-based urethane resin 1 | Ester-based urethane resin 2 | Ester-based urethane resin 3 |
| Crosslinking agent (B) | | (B1) | (B1) | (B1) | (B1) |
| Part(s) by mass (solid content) of crosslinking agent (B) relative to 100 parts by mass of coating film-forming resin (A) | | 40 | 40 | 40 | 40 |
| Part(s) by mass (solid content) of magnesium hydroxide (C) relative to 100 parts by mass in total of coating film-forming resin (A) and crosslinking agent (B) | | 60 | 60 | 60 | 60 |
| Storage stability test | | 5 | 5 | 5 | 5 |
| Boiling water resistance test | | 10 | 8F | 10 | 10 |
| Moisture resistance test (CCHC test) | | 10 | 8F | 10 | 10 |
| Corrosion resistance test | 4T folded part | 5 | 5 | 5 | 5 |
| | Edge part | 5 | 5 | 5 | 5 |
| | Crosscut part | 5 | 5 | 5 | 5 |
| Alkali resistance test | | 10 | 8F | 10 | 10 |
| Acid resistance test | | 10 | 8F | 10 | 10 |
| Immersion-drying cycle test using acidic salt water | 4T folded part | 5 | 5 | 5 | 5 |
| | Edge part | 5 | 5 | 5 | 5 |
| | Crosscut part | 5 | 5 | 5 | 5 |

**[Table 5C]**

| | | Example 9 | Example 10 | Example 11 | Example 12 |
|---|---|---|---|---|---|
| Magnesium hydroxide (C) | | (C1) | (C1) | (C1) | (C1) |
| Coating film-forming resin (A) | Type | (A4) | (A1) | (A1) | (A1) |
| | | Ester-based urethane resin 4 | Ester-based urethane resin 1 | Ester-based urethane resin 1 | Ester-based urethane resin 1 |
| Crosslinking agent (B) | | (B1) | (B1) | (B1) | (B1) |
| Part(s) by mass (solid content) of crosslinking agent (B) relative to 100 parts by mass of coating film-forming resin (A) | | 40 | 3 | 6 | 90 |
| Part(s) by mass (solid content) of magnesium hydroxide (C) relative to 100 parts by mass in total of coating film-forming resin (A) and crosslinking agent (B) | | 60 | 60 | 60 | 60 |
| Storage stability test | | 5 | 5 | 5 | 5 |
| Boiling water resistance test | | 10 | 8F | 10 | 10 |
| Moisture resistance test (CCHC test) | | 8F | 8F | 10 | 10 |
| Corrosion resistance test | 4T folded part | 5 | 5 | 5 | 5 |
| | Edge part | 5 | 5 | 5 | 5 |
| | Crosscut part | 5 | 5 | 5 | 5 |
| Alkali resistance test | | 8F | 8F | 10 | 10 |
| Acid resistance test | | 8F | 8F | 10 | 10 |
| Immersion-drying cycle test using acidic salt water | 4T folded part | 5 | 5 | 5 | 5 |
| | Edge part | 4 | 4 | 5 | 5 |
| | Crosscut part | 4 | 4 | 5 | 5 |

**[Table 5D]**

| | | Example 13 | Example 14 | Example 15 | Example 16 |
|---|---|---|---|---|---|
| Magnesium hydroxide (C) | | (C1) | (C1) | (C1) | (C1) |
| Coating film-forming resin (A) | Type | (A1) | (A12) | (A11) | (A9) |
| | | Ester-based urethane resin 1 | Polyester resin 1 | Epoxy resin 1 | Ether-based urethane resin 1 |
| Crosslinking agent (B) | | (B1) | (B1) | (B1) | (B1) |
| Part(s) by mass (solid content) of crosslinking agent (B) relative to 100 parts by mass of coating film-forming resin (A) | | 120 | 40 | 40 | 40 |
| Part(s) by mass (solid content) of magnesium hydroxide (C) relative to 100 parts by mass in total of coating film-forming resin (A) and crosslinking agent (B) | | 60 | 60 | 60 | 60 |
| Storage stability test | | 5 | 5 | 5 | 5 |
| Boiling water resistance test | | 8F | 10 | 10 | 10 |
| Moisture resistance test (CCHC test) | | 8F | 10 | 10 | 10 |
| Corrosion resistance test | 4T folded part | 5 | 5 | 5 | 5 |
| | Edge part | 5 | 5 | 5 | 5 |
| | Crosscut part | 5 | 5 | 5 | 5 |
| Alkali resistance test | | 8F | 10 | 10 | 10 |
| Acid resistance test | | 8F | 10 | 10 | 10 |
| Immersion-drying cycle test using acidic salt water | 4T folded part | 5 | 5 | 4 | 5 |
| | Edge part | 4 | 5 | 5 | 4 |
| | Crosscut part | 4 | 5 | 5 | 4 |

**[Table 5E]**

| | | Example 17 | Example 18 | Example 19 | Example 20 |
|---|---|---|---|---|---|
| Magnesium hydroxide (C) | | (C1) | (C1) | (C1) | (C1) |
| Coating film-forming resin (A) | Type | (A10) | (A13) | (A1) | (A1) |
| | | Carbonate-based urethane resin 1 | Acrylic resin 1 | Ester-based urethane resin 1 | Ester-based urethane resin 1 |
| Crosslinking agent (B) | | (B1) | (B1) | (B2) | (B2) |
| Part(s) by mass (solid content) of crosslinking agent (B) relative to 100 parts by mass of coating film-forming resin (A) | | 40 | 40 | 40 | 3 |
| Part(s) by mass (solid content) of magnesium hydroxide (C) relative to 100 parts by mass in total of coating film-forming resin (A) and crosslinking agent (B) | | 60 | 60 | 60 | 60 |
| Storage stability test | | 5 | 5 | 5 | 5 |
| Boiling water resistance test | | 10 | 10 | 10 | 8F |
| Moisture resistance test (CCHC test) | | 10 | 10 | 10 | 8F |
| Corrosion resistance test | 4T folded part | 5 | 5 | 5 | 5 |
| | Edge part | 5 | 5 | 5 | 5 |
| | Crosscut part | 5 | 5 | 5 | 5 |
| Alkali resistance test | | 10 | 10 | 10 | 8F |
| Acid resistance test | | 10 | 10 | 10 | 8F |
| Immersion-drying cycle test using acidic salt water | 4T folded part | 5 | 4 | 5 | 5 |
| | Edge part | 4 | 4 | 5 | 4 |
| | Crosscut part | 4 | 4 | 5 | 4 |

**[Table 5F]**

| | | Example 21 | Example 22 | Example 23 | Example 24 |
|---|---|---|---|---|---|
| Magnesium hydroxide (C) | | (C1) | (C1) | (C1) | (C1) |
| Coating film-forming resin (A) | Type | (A1) | (A1) | (A1) | (A12) |
| | | Ester-based urethane resin 1 | Ester-based urethane resin 1 | Ester-based urethane resin 1 | Polyester resin 1 |
| Crosslinking agent (B) | | (B2) | (B2) | (B2) | (B2) |
| Part(s) by mass (solid content) of crosslinking agent (B) relative to 100 parts by mass of coating film-forming resin (A) | | 6 | 90 | 120 | 40 |
| Part(s) by mass (solid content) of magnesium hydroxide (C) relative to 100 parts by mass in total of coating film-forming resin (A) and crosslinking agent (B) | | 60 | 60 | 60 | 60 |
| Storage stability test | | 5 | 5 | 5 | 5 |
| Boiling water resistance test | | 10 | 10 | 8F | 10 |
| Moisture resistance test (CCHC test) | | 10 | 10 | 8F | 10 |
| Corrosion resistance test | 4T folded part | 5 | 5 | 5 | 5 |
| | Edge part | 5 | 5 | 5 | 5 |
| | Crosscut part | 5 | 5 | 5 | 5 |
| Alkali resistance test | | 10 | 10 | 8F | 10 |
| Acid resistance test | | 10 | 10 | 8F | 10 |
| Immersion-drying cycle test using acidic salt water | 4T folded part | 5 | 5 | 5 | 5 |
| | Edge part | 5 | 5 | 4 | 5 |
| | Crosscut part | 5 | 5 | 4 | 5 |

**[Table 5G]**

| | | Example 25 | Example 26 | Example 27 | Example 28 |
|---|---|---|---|---|---|
| Magnesium hydroxide (C) | | (C1) | (C1) | (C1) | (C1) |
| Coating film-forming resin (A) | Type | (A9) | (A10) | (A13) | (A1) |
| | | Ether-based urethane resin 1 | Carbonate-based urethane resin 1 | Acrylic resin 1 | Ester-based urethane resin 1 |
| Crosslinking agent (B) | | (B2) | (B2) | (B2) | (B1) |
| Part(s) by mass (solid content) of crosslinking agent (B) relative to 100 parts by mass of coating film-forming resin (A) | | 40 | 40 | 40 | 40 |
| Part(s) by mass (solid content) of magnesium hydroxide (C) relative to 100 parts by mass in total of coating film-forming resin (A) and crosslinking agent (B) | | 60 | 60 | 60 | 20 |
| Storage stability test | | 5 | 5 | 5 | 5 |
| Boiling water resistance test | | 10 | 10 | 10 | 10 |
| Moisture resistance test (CCHC test) | | 10 | 10 | 10 | 10 |
| Corrosion resistance test | 4T folded part | 5 | 5 | 5 | 5 |
| | Edge part | 5 | 5 | 5 | 5 |
| | Crosscut part | 5 | 5 | 5 | 5 |
| Alkali resistance test | | 10 | 10 | 10 | 10 |
| Acid resistance test | | 10 | 10 | 10 | 10 |
| Immersion-drying cycle test using acidic salt water | 4T folded part | 5 | 5 | 4 | 5 |
| | Edge part | 4 | 4 | 4 | 5 |
| | Crosscut part | 4 | 4 | 4 | 5 |

**[Table 5H]**

| | | Example 29 | Example 30 | Example 31 |
|---|---|---|---|---|
| Magnesium hydroxide (C) | | (C1) | (C1) | (C1) |
| Coating film-forming resin (A) | Type | (A1) | (A1) | (A1) |
| | | Ester-based urethane resin 1 | Ester-based urethane resin 1 | Ester-based urethane resin 1 |
| Crosslinking agent (B) | | (B1) | (B1) | (B1) |
| Part(s) by mass (solid content) of crosslinking agent (B) relative to 100 parts by mass of coating film-forming resin (A) | | 40 | 40 | 40 |
| Part(s) by mass (solid content) of magnesium hydroxide (C) relative to 100 parts by mass in total of coating film-forming resin (A) and crosslinking agent (B) | | 3 | 140 | 160 |
| Storage stability test | | 5 | 5 | 5 |
| Boiling water resistance test | | 10 | 10 | 8F |
| Moisture resistance test (CCHC test) | | 10 | 10 | 8F |
| Corrosion resistance test | 4T folded part | 5 | 5 | 5 |
| | Edge part | 5 | 5 | 5 |
| | Crosscut part | 5 | 5 | 5 |
| Alkali resistance test | | 10 | 10 | 8F |
| Acid resistance test | | 10 | 10 | 8F |
| Immersion-drying cycle test using acidic salt water | 4T folded part | 5 | 5 | 4 |
| | Edge part | 4 | 5 | 4 |
| | Crosscut part | 4 | 5 | 4 |

**[Table 6A]**

| | | Comparative Example 1 | Comparative Example 2 | Comparative Example 3 | Comparative Example 4 |
|---|---|---|---|---|---|
| Magnesium hydroxide (C') and other materials | | Magnesium hydroxide (C3) | Magnesium hydroxide (C4) | Magnesium hydroxide (C5) | Magnesium hydroxide (C6) |
| Coating film-forming resin (A) | Type | (A1) | (A1) | (A1) | (A1) |
| | | Ester-based urethane resin 1 | Ester-based urethane resin 1 | Ester-based urethane resin 1 | Ester-based urethane resin 1 |
| Crosslinking agent (B) | | (B1) | (B1) | (B1) | (B1) |
| Part(s) by mass of crosslinking agent (B) relative to 100 parts by mass of coating film-forming resin (A) | | 40 | 40 | 40 | 40 |
| Part(s) by mass of (C') or other materials relative to 100 parts by mass in total of coating film-forming resin (A) and crosslinking agent (B) | | 60 | 60 | 60 | 60 |
| Storage stability test | | 5 | 5 | 5 | 5 |
| Boiling water resistance test | | 4D | 6D | 6D | 6D |
| Moisture resistance test (CCHC test) | | 2D | 2D | 4D | 6D |
| Corrosion resistance test | 4T folded part | 5 | 5 | 5 | 5 |
| | Edge part | 4 | 4 | 4 | 4 |
| | Crosscut part | 4 | 4 | 4 | 4 |
| Alkali resistance test | | 4D | 4D | 6D | 6D |
| Acid resistance test | | 6D | 6D | 6D | 6D |
| Immersion-drying cycle test using acidic salt water | 4T folded part | 4 | 4 | 4 | 4 |
| | Edge part | 1 | 2 | 2 | 2 |
| | Crosscut part | 1 | 1 | 2 | 2 |

**[Table 6B]**

| | | Comparative Example 5 | Comparative Example 6 | Comparative Example 7 | Comparative Example 8 |
|---|---|---|---|---|---|
| Magnesium hydroxide (C') and other materials | | Magnesium hydroxide (C7) | Aluminum hydroxide | Calcium vanadate | Calcium phosphate hydroxide |
| Coating film-forming resin (A) | Type | (A1) | (A1) | (A1) | (A1) |
| | | Ester-based urethane resin 1 | Ester-based urethane resin 1 | Ester-based urethane resin 1 | Ester-based urethane resin 1 |
| Crosslinking agent (B) | | (B1) | (B1) | (B1) | (B1) |
| Part(s) by mass of crosslinking agent (B) relative to 100 parts by mass of coating film-forming resin (A) | | 40 | 40 | 40 | 40 |
| Part(s) by mass of (C') or other materials relative to 100 parts by mass in total of coating film-forming resin (A) and crosslinking agent (B) | | 60 | 60 | 60 | 60 |
| Storage stability test | | 5 | 5 | 3 | 5 |
| Boiling water resistance test | | 6D | 6D | 10 | 6MD |
| Moisture resistance test (CCHC test) | | 6D | 6D | 10 | 6MD |
| Corrosion resistance test | 4T folded part | 5 | 5 | 5 | 5 |
| | Edge part | 4 | 4 | 5 | 4 |
| | Crosscut part | 4 | 4 | 5 | 4 |
| Alkali resistance test | | 6D | 6D | 10 | 6MD |
| Acid resistance test | | 6D | 6D | 10 | 8MD |
| Immersion-drying cycle test using acidic salt water | 4T folded part | 4 | 4 | 4 | 4 |
| | Edge part | 2 | 2 | 3 | 1 |
| | Crosscut part | 2 | 2 | 3 | 1 |

**[Table 6C]**

| | | Comparative Example 9 | Comparative Example 10 | Reference Example 1 |
|---|---|---|---|---|
| Magnesium hydroxide (C') and other materials | | Condensed phosphate | Magnesium oxide | Nippe Supercoat 667 Primer |
| Coating film-forming resin (A) | Type | (A1) | (A1) | |
| | | Ester-based urethane resin 1 | Ester-based urethane resin 1 | |
| Crosslinking agent (B) | | (B1) | (B1) | |
| Part(s) by mass of crosslinking agent (B) relative to 100 parts by mass of coating film-forming resin (A) | | 40 | 40 | |
| Part(s) by mass of (C') or other materials relative to 100 parts by mass in total of coating film-forming resin (A) and crosslinking agent (B) | | 60 | 60 | |
| Storage stability test | | 3 | 3 | 3 |
| Boiling water resistance test | | 6MD | 10 | 10 |
| Moisture resistance test (CCHC test) | | 6MD | 10 | 10 |
| Corrosion resistance test | 4T folded part | 5 | 5 | 5 |
| | Edge part | 4 | 5 | 5 |
| | Crosscut part | 4 | 5 | 5 |
| Alkali resistance test | | 6MD | 10 | 10 |
| Acid resistance test | | 6MD | 10 | 10 |
| Immersion-drying cycle test using acidic salt water | 4T folded part | 4 | 5 | 5 |
| | Edge part | 1 | 5 | 5 |
| | Crosscut part | 1 | 5 | 5 |

### [Evaluation item]

### (Procedure for measuring the solubility of magnesium hydroxide in artificial acidic seawater)

As an acidic solution comprising sulfate radicals, the acidic aqueous salt solution used in Method B specified in JIS G 0594:2019 cyclic corrosion test method was used as a reference.

MARINE ART SF-1 (manufactured by Tomita Pharmaceutical Co., Ltd.) was used as artificial seawater, and it was adjusted to pH = 2.5 with a mixed solution of nitric acid and sulfuric acid as specified in JIS G 0594, 4.1.1, Item c), and artificial acidic seawater was obtained.

Next, 100 g of artificial acidic seawater and 1 g of a pigment (magnesium hydroxide) were added to a narrow-mouthed bottle made of polyethylene and a stirrer chip was added, and the mixture was stirred at room temperature for 4 hours.

Then, after leaving it at room temperature for 24 hours, the supernatant was collected with a syringe equipped with a syringe filter, and the element concentration was measured with an ICP emission spectrometer ICPS-7510 (manufactured by Shimadzu Corporation). Element concentration of the artificial acidic seawater was also measured in the same manner. The value obtained by subtracting the magnesium metal ion concentration contained in the artificial acidic seawater from the magnesium metal ion concentration contained in the supernatant is defined as the magnesium metal ion concentration in an aqueous solution prepared by adding 1 g of a magnesium hydroxide to 100 g of an artificial acidic seawater solution.

### (Procedure for measuring conductivity in purified water)

100 g of ion-exchanged water and 1 g of a pigment (magnesium hydroxide) were added to a narrow-mouthed bottle made of polyethylene, then a stirrer chip was added, and the mixture was stirred at room temperature for 4 hours. Then, the conductivity was measured using an electrical conductivity meter CM-42X (manufactured by DKK-TOA Corporation).

### (Storage stability test)

The coating composition obtained above was allowed to stand at 50°C for 4 weeks. The state of the coating composition after standing was visually observed and the storage stability was evaluated according to the following criteria.
5: The coating composition is uniform without stirring.
4: Although some sediment was generated, the coating composition easily becomes uniform by stirring with a spatula.
3: Although some sediment was generated, the coating composition becomes uniform by stirring with a spatula.
2: Although sediment was generated, the coating composition becomes uniform by stirring with a disper.
1: Sediment was generated, and the coating composition does not become uniform even if it is stirred with a disper.

### [Evaluation items of coating film]

### 1) Boiling water resistance test

The coated steel plate obtained above was cut into 5 cm × 10 cm, and the obtained specimen was immersed in boiling water at about 100°C for 2 hours and then pulled up. Then, the appearance of the coating film on its front side was evaluated according to ASTM D714-56 (flat part blistering evaluation).

Here, ASTM D714-56 evaluates the size (mean diameter) and density of each blister in comparison with a standard judgment photograph and indicates a grade symbol. The size is classified in four grades in the order of 8 (diameter: about 1 mm), 6 (diameter: about 2 mm), 4 (diameter: about 3 mm) and 2 (diameter: about 5 mm), and the density is classified in five grades in the ascending order of F, FM, M, MD and D, and when there is no blister, this is evaluated as 10. A score of 8 FM or higher was evaluated as good.

Coated steel plate specimens were evaluated after immersed in boiling water at about 100°C for 2 hours by performing a grid tape adhesion test (grid adhesion test). In the grid tape adhesion test was performed according to JIS K 5400 8.5.2 (1990) grid tape method, and the gap between cuts was set to 1 mm, 100 grids were made, and cellophane adhesive tape was adhered to the surface of the grid. Then, the tape was peeled off rapidly, and the number of grids remaining on the coated surface was examined.

### 2) Moisture resistance test (CCHC test)

A coated steel plate was cut into 5 cm × 10 cm, and the resulting specimen was left to stand for 500 hours under the condition of 50°C × 98 RH% with purified water. Then the blistering of a flat part was evaluated according to ASTM D714-56 in the same manner as in the boiling water resistance test. A score of 8 FM or higher was evaluated as good. In this test, a large wet tester (manufactured by Suga Test Instruments Co., Ltd.) was used.

### 3) Corrosion resistance test

A coated steel plate was cut to a size of 5 cm × 15 cm. The cutting was performed alternately from the front surface and the back surface, and the specimens were prepared such that the cross section of each specimen had both an upper burr (cut from the back surface) and a lower burr (cut from the front surface).

Next, a crosscut having a narrow angle of 30 degrees and a cut width of 0.5 mm was formed with a utility knife at the center of the front side such that the crosscut reached the substrate. The upper edge part of the coated steel plate was sealed with a corrosion-resistant coating material, and a 4T folded part was formed at the lower end, from which four plates were to be removed after processing.

The 4T folding processing refers to a process in which a coated plate is folded with the front surface thereof outside, then four plates with the same thickness as the coated plate are interjected inside, and the coated plate is folded 180 degrees with a vise. After processing, four of the plates were removed and the resulting coated plate was provided for the test.

A schematic view of the coated steel plate specimen obtained as described above is shown in FIG. 1.

FIG. 1A is a diagram schematically showing a cross section 20 of an upper burr and a cross section 30 of a lower burr in the obtained coated steel plate specimen 10. Further, the coated steel plate specimen 10 has a coating film front surface 11 and a coating film back surface 12.

FIG. 1(B) is a schematic view showing a crosscut part 40 and a 4T folded part 50 provided in a coated steel plate specimen 10 used for a corrosion resistance test. Further, the coated steel plate specimen 10 has an upper burr 21 and a lower burr 31.

Each of the obtained coated steel plate specimens was subjected to a combined cyclic corrosion test (CCT) in accordance with JIS K 5600-7-9A JASO M609. Taking (spraying 5% saline at 35°C for 2 hours)-(drying at 60°C for 4 hours)-(allowing to stand in a moisture resistance tester at 50°C and RH 95% or more for 2 hours) as one cycle, a 120-cycle test (960 hours in total) was carried out. The state of the edge part, the crosscut part and the 4T folded part of the coated steel plate specimen after this test was evaluated based on the following evaluation method and evaluation criteria. In each case, a score of 4 or higher was evaluated as good.

### Equipment used: combined cyclic tester CYP-90 (manufactured by Suga Test Instruments Co., Ltd.)

### (Corrosion resistance test: 4T folded part)

The total length of a rusted part in a 4T folded part was measured and evaluated according to the following criteria.
5: No generation of rust is observed.
4: White rust is observed, and it has a total length of less than 10 mm.
3: White rust has a total length of 10 mm or more and less than 25 mm.
2: White rust has a total length of 25 mm or more and less than 40 mm.
1: White rust has a total length of 40 mm or more, or generation of red rust is observed.

### (Corrosion resistance test: edge part)

The average value of the edge creep width (blister width) of the left and right long sides (that is, the long side having the upper burr and the long side having the lower burr) of a coated steel plate specimen was calculated and evaluated according to the following criteria.
5: Blister width is less than 5 mm.
4: Blister width is 5 mm or more and less than 10 mm.
3: Blister width is 10 mm or more and less than 15 mm.
2: Blister width is 15 mm or more and less than 20 mm.
1: Blister width is 20 mm or more.

### (Corrosion resistance test: crosscut part)

The corrosion state of a cross-cut part was evaluated according to the following criteria based on the ratio of the length of white rust generated in an exposed portion of a substrate with a cut width of 0.5 mm and the average value of the widths (the sum of both sides) of the left and right blisters of the crosscut part.
5: The length ratio of the white rust generated in the substrate-exposed portion is less than 25% and the blister width is less than 3 mm.
4: The length ratio of the white rust generated in the substrate-exposed portion is 25% or more and less than 50% and the blister width is less than 3 mm.
3: The length ratio of the white rust generated in the substrate-exposed portion is 50% or more and the blister width is less than 3 mm.
2: The length ratio of the white rust generated in the substrate-exposed portion is 50% or more and the blister width is 3 mm or more and less than 5 mm.
1: The length ratio of the white rust generated in the substrate-exposed portion is 50% or more and the blister width is 5 mm or more.

### 4) Alkali resistance test

Each coated steel plate was cut into 5 cm × 10 cm, and each specimen was immersed in a 5% aqueous sodium hydroxide solution at 23°C for 48 hours, taken out, washed with water, and dried at room temperature. The resulting coated steel plate specimen was evaluated as to blister on a flat portion in accordance with ASTM D714-56 in the same manner as in the boiling water resistance test. A score of 8 FM or higher was evaluated as good.

### 5) Acid resistance test

Each coated steel plate was cut into 5 cm × 10 cm, and the obtained specimen was immersed in a 5% aqueous sulfuric acid solution at 23°C for 48 hours, taken out and washed, and dried at room temperature. The resulting coated steel plate specimen was evaluated for blister on a flat portion in accordance with ASTM D714-56 in the same manner as in the boiling water resistance test. A score of 8 FM or higher was evaluated as good.

### 6) Immersion-drying cycle test using acidic salt water

### (Preparation of test plates)

Each of the coated steel plates obtained above was cut into 5 cm × 10 cm, and a 4T folded part was provided in the lower end of the obtained specimen in the same manner as in the corrosion resistance test.

### (Preparation of acidic salt water)

As an acidic solution comprising sulfate radicals, the acidic aqueous salt solution used in Method B specified in JIS G 0594 cyclic corrosion test method was used as a reference. Specifically, using MARINE ART SF-1 (manufactured by Tomita Pharmaceutical Co., Ltd.) having a composition similar to that of the artificial seawater specified in JIS G 0594, it was adjusted to pH = 2.5 with a mixed solution of nitric acid and sulfuric acid specified in 4.2.2, and acidic salt water was obtained.

### (Test conditions)

Each of the obtained coated steel plate specimens was subjected to a 15-cycle test (360 hours in total) under a 23° C condition with 6 hours of immersion → 18 hours of drying as one cycle. The state of the edge part, the crosscut part and the 4T folded part of the coated steel plate specimen after the test was evaluated based on the following evaluation method and evaluation criteria. In each case, a score of 4 or higher was evaluated as good.

### (Test using acidic salt water: 4T folded part)

The total length of a rusted part in a 4T folded part was measured and evaluated according to the following criteria.
5: No generation of rust is observed.
4: White rust is observed, and it has a total length of less than 10 mm.
3: White rust has a total length of 10 mm or more and less than 25 mm.
2: White rust has a total length of 25 mm or more and less than 40 mm.
1: White rust has a total length of 40 mm or more, or generation of red rust is observed.

### (Test using acidic salt water: edge part)

The average value of the edge creep width (blister width) of the left and right long sides (that is, the long side having the upper burr and the long side having the lower burr) of a coated steel plate specimen was calculated and evaluated according to the following criteria.
5: Blister width is less than 5 mm.
4: Blister width is 5 mm or more and less than 10 mm.
3: Blister width is 10 mm or more and less than 15 mm.
2: Blister width is 15 mm or more and less than 20 mm.
1: Blister width is 20 mm or more.

### (Test using acidic salt water: crosscut part)

The corrosion state of a cross-cut part was evaluated according to the following criteria based on the ratio of the length of white rust generated in an exposed portion of a substrate with a cut width of 0.5 mm and the average value of the widths (the sum of both sides) of the left and right blisters of the crosscut part.
5: The length ratio of the white rust generated in the substrate-exposed portion is less than 25% and the blister width is less than 3 mm.
4: The length ratio of the white rust generated in the substrate-exposed portion is 25% or more and less than 50% and the blister width is less than 3 mm.
3: The length ratio of the white rust generated in the substrate-exposed portion is 50% or more and the blister width is less than 3 mm.
2: The length ratio of the white rust generated in the substrate-exposed portion is 50% or more and the blister width is 3 mm or more and less than 5 mm.
1: The length ratio of the white rust generated in the substrate-exposed portion is 50% or more and the blister width is 5 mm or more.

According to the results of Examples, the corrosion-resistant coating composition of the present invention had superior storage stability and formed a coating film with a superior corrosion-resistant property and superior moisture resistance over a long period. Moreover, it formed a coating film with a superior corrosion-resistant property for a long period even under acidic environmental conditions. Thus, for example, the rust generation that may be caused by "acid rain" or the like can be inhibited. In addition, the deterioration of the moisture resistance of a coating film is suppressed or greatly reduced, and the blistering in a coating film is also suppressed. Further, in the Examples, the protective effects by a coating film were sufficiently elicited even at an edge part, a crosscut part, and the like. Further, in the Examples, the same level of corrosion-resistant property was observed as the corrosion-resistant test result obtained using the coating composition containing chromium of Reference Example 1, and the storage stability of the coating compositions was evaluated better than that of Reference Example 1.

In Comparative Examples 1 to 5, the BET specific surface area and the lattice constant of the magnesium hydroxide are outside the ranges of those of the magnesium hydroxide (C) according to the present invention. For this, the formed coating films were not able to exhibit sufficient corrosion-resistant property and moisture resistance.

Comparative Examples 6 to 10 do not contain magnesium hydroxide (C). For this, the results were not good in any of the storage stability of the coating composition, the corrosion-resistant property and the moisture resistance of the formed coating film.

For example, in Comparative Example 7, calcium vanadate is used instead of the magnesium hydroxide (C). The storage stability of the coating composition of Comparative Example 7 was not good, and the durability of the coating film was not good at the edge part and the crosscut part when acidic salt water was used. It is considered to be because calcium vanadate is highly watersoluble, so that it reacts with water in the coating composition, resulting in an effect on storage stability, and when a coating film is formed, it easily elutes from the coating film and it becomes difficult to provide corrosion-suppressing agents for a long period.

Further, for example, in Comparative Example 10, magnesium oxide is used instead of the magnesium hydroxide (C). The storage stability of the coating composition of Comparative Example 10 was not good. It is considered to be because magnesium oxide is inferior in dispersibility in the coating composition compared with the magnesium hydroxide (C).

### INDUSTRIAL APPLICABILITY

The corrosion-resistant coating composition of the present invention can exhibit a superior corrosion-resistant property for a long period and can form a coating film that exhibits superior moisture resistance.

Further, according to the method for producing a coating film according to the present invention, a superior corrosion-resistant property is elicited for a long period and a coating film with superior moisture resistance can be formed.

### REFERENCE SIGNS LIST

- 10: Coated steel plate specimen
- 11: Front surface of coating film
- 12: Back surface of coating film
- 20: Cross section of upper burr
- 21: Upper burr
- 30: Cross section of lower burr
- 31: Lower burr
- 40: Crosscut part
- 50: 4T folded part

## Claims

1. A corrosion-resistant coating composition comprising a coating film-forming resin (A), a crosslinking agent (B), and a magnesium hydroxide (C),
wherein the magnesium hydroxide has an oil absorption of 70 g/100 g or less, and a BET specific surface area of 4.0 m²/g or less,
wherein the coating film-forming resin (A) comprises at least one selected from the group consisting of epoxy resin, polyester resin, acrylic resin, urethane resin, and modified products thereof,
wherein the crosslinking agent (B) comprises one or more selected from blocked polyisocyanate compounds and amino resins,
wherein the oil absorption and the BET specific surface area is measured according to the methods set out in the description.

2. The corrosion-resistant coating composition according to claim 1,
wherein the magnesium hydroxide (C) is a compound having a conductivity of 250 µS/cm or less in an aqueous solution prepared by adding 1 g of the magnesium hydroxide (C) to 100 g of purified water,
wherein the conductivity is measured according to the method set out in the description.

3. The corrosion-resistant coating composition according to claim 1 or 2, wherein the magnesium hydroxide (C) exhibits a pH of 8 or more and 12 or less in an aqueous solution prepared by adding 1 g of the magnesium hydroxide (C) to 100 g of purified water, wherein an average particle diameter of the magnesium hydroxide (C) is 0.5 um or more and 20 µm or less, and wherein the average particle diameter of the magnesium hydroxide (C) is measured according to the method set out in the description.

4. The corrosion-resistant coating composition according to any one of claims 1 to 3, wherein
the coating film-forming resin (A) comprises at least one selected from the group consisting of urethane resin and a modified product thereof,
wherein a glass transition temperature of the urethane resin is -50°C or higher and 70°C or lower, and
wherein the glass transition temperature is measured according to the method set out in the description.

5. The corrosion-resistant coating composition according to any one of claims 1 to 4, wherein
the coating film-forming resin (A) comprises at least one selected from the group consisting of urethane resin and a modified product thereof, and
wherein the urethane resin comprises at least one selected from the group consisting of ester-based urethane resin, ether-based urethane resin, and carbonate-based urethane resin.

6. The corrosion-resistant coating composition according to any one of claims 1 to 5, wherein a number-average molecular weight of the coating film-forming resin (A) is 1,000 or more and 40,000 or less.

7. The corrosion-resistant coating composition according to any one of claims 1 to 6, wherein the coating film-forming resin (A) comprises at least one selected from the group consisting of ester-based urethane resin, epoxy resin, polyester resin, and modified products thereof.

8. The corrosion-resistant coating composition according to claim 7, wherein at least one of the ester-based urethane resin, the epoxy resin, and the polyester resin has a solid acid value of 30 mg KOH/g or less.

9. The corrosion-resistant coating composition according to any one of claims 1 to 8, wherein an amount of the magnesium hydroxide (C) is in the range of 1 part by mass or more and 150 parts by mass or less relative to 100 parts by mass of a total of a solid content of the coating film-forming resin (A) and a solid content of the crosslinking agent (B).

10. A method for producing a corrosion-resistant coating film, comprising:
a coating step of applying the corrosion-resistant coating composition according to any one of claims 1 to 9 to an article to be coated, and
a step of curing the corrosion-resistant coating composition at a temperature of 150°C or higher and 270°C or lower.

## Patentansprüche

1. Korrosionsbeständige Beschichtungszusammensetzung, die ein einen Beschichtungsfilm bildendes Harz (A), einen Vernetzer (B) und ein Magnesiumhydroxid (C) umfasst,
wobei das Magnesiumhydroxid eine Ölabsorption von 70 g/100 g oder weniger und eine spezifische Oberfläche nach dem BET-Verfahren von 4,0 m²/g oder weniger aufweist,
wobei das einen Beschichtungsfilm bildende Harz (A) zumindest eines, ausgewählt aus der aus Epoxidharz, Polyesterharz, Acrylharz, Urethanharz und modifizierten Produkten davon bestehenden Gruppe umfasst,
wobei der Vernetzer (B) einen oder mehrere, ausgewählt aus blockierten Polyisocyanat-Verbindungen und Aminoresten umfasst,
wobei die Ölabsorption und die spezifische Oberfläche nach dem BET-Verfahren gemäß den in der Beschreibung dargelegten Verfahren gemessen werden.

2. Korrosionsbeständige Beschichtungszusammensetzung nach Anspruch 1, wobei
das Magnesiumhydroxid (C) eine Verbindung mit einer Leitfähigkeit von 250 µS/cm oder weniger in einer wässrigen Lösung ist, die durch Zugabe von 1 g des Magnesiumhydroxids (C) zu 100 g gereinigtem Wasser erhalten wurde,
wobei die Leitfähigkeit gemäß dem in der Beschreibung dargelegten Verfahren gemessen wird.

3. Korrosionsbeständige Beschichtungszusammensetzung nach Anspruch 1 oder 2, wobei das Magnesiumhydroxid (C) einen pH von 8 oder mehr und 12 oder weniger in einer wässrigen Lösung aufweist, die durch Zugabe von 1 g des Magnesiumhydroxids (C) zu 100 g gereinigtem Wasser erhalten wurde, wobei der durchschnittliche Partikeldurchmesser des Magnesiumhydroxids (C) 0,5 µm oder mehr und 20 µm oder weniger beträgt und wobei der durchschnittliche Partikeldurchmesser des Magnesiumhydroxids (C) gemäß dem in der Beschreibung dargelegten Verfahren gemessen wird.

4. Korrosionsbeständige Beschichtungszusammensetzung nach einem der Ansprüche 1 bis 3, wobei
das einen Beschichtungsfilm bildende Harz (A) zumindest eines, ausgewählt aus der aus Urethanharz und einem modifizierten Produkt davon bestehenden Gruppe ist,
wobei die Glasübergangstemperatur des Urethanharzes -50 °C oder mehr und 70 °C oder weniger beträgt und die Glasübergangstemperatur gemäß dem in der Beschreibung dargelegten Verfahren gemessen wird.

5. Korrosionsbeständige Beschichtungszusammensetzung nach einem der Ansprüche 1 bis 4, wobei
das einen Beschichtungsfilm bildende Harz (A) zumindest eines, ausgewählt aus der aus Urethanharz und einem modifizierten Produkt davon bestehenden Gruppe umfasst und
wobei das Urethanharz zumindest eines, ausgewählt aus der aus Urethanharz auf Esterbasis, Urethanharz auf Etherbasis und Urethanharz auf Carbonatbasis bestehenden Gruppe umfasst.

6. Korrosionsbeständige Beschichtungszusammensetzung nach einem der Ansprüche 1 bis 5, wobei das zahlenmittlere Molekulargewicht des einen Beschichtungsfilm bildenden Harzes (A) 1.000 oder mehr und 40.000 oder weniger beträgt.

7. Korrosionsbeständige Beschichtungszusammensetzung nach einem der Ansprüche 1 bis 6, wobei das einen Beschichtungsfilm bildende Harz (A) zumindest eines, ausgewählt aus der aus Urethanharz auf Esterbasis, Epoxidharz, Polyesterharz und modifizierten Produkten davon bestehenden Gruppe umfasst.

8. Korrosionsbeständige Beschichtungszusammensetzung nach Anspruch 7, wobei zumindest eines aus dem Urethanharz auf Esterbasis, dem Epoxidharz und dem Polyesterharz eine Säurezahl im festen Zustand von 30 mg KOH/g oder weniger aufweist.

9. Korrosionsbeständige Beschichtungszusammensetzung nach einem der Ansprüche 1 bis 8, wobei die Menge des Magnesiumhydroxids (C) im Bereich von 1 Massenteilen oder mehr und 150 Massenteilen oder weniger, bezogen auf 100 Massenteile des gesamten Feststoffgehalts des einen Beschichtungsfilm bildenden Harzes (A) und des Feststoffgehalts des Vernetzers (B) liegt.

10. Verfahren zur Herstellung eines korrosionsbeständigen Beschichtungsfilms, das Folgendes umfasst:
einen Beschichtungsschritt des Aufbringens einer korrosionsbeständigen Beschichtungszusammensetzung nach einem der Ansprüche 1 bis 9 auf einen zu beschichtenden Gegenstand und
einen Schritt des Härtens der korrosionsbeständigen Beschichtungszusammensetzung bei einer Temperatur von 150 °C oder mehr und 270 °C oder weniger.

## Revendications

1. Composition de revêtement résistant à la corrosion comprenant une résine de formation de film de revêtement (A), un agent de réticulation (B), et un hydroxyde de magnésium (C),
dans laquelle l'hydroxyde de magnésium présente une absorption d'huile de 70 g/100 g ou moins, et une surface spécifique BET de 4,0 m²/g ou moins,
dans laquelle la résine de formation de film de revêtement (A) comprend au moins une sélectionnée dans le groupe comprenant une résine époxy, une résine de polyester, une résine acrylique, une résine uréthane et de produits modifiés de celles-ci,
dans laquelle l'agent de réticulation (B) comprend un ou plusieurs composés choisis parmi des composés polyisocyanates bloqués et des résines aminées,
dans laquelle l'absorption d'huile et la surface spécifique BET sont mesurées selon les procédés indiqués dans la description.

2. Composition de revêtement résistant à la corrosion (1) selon la revendication 1,
dans laquelle l'hydroxyde de magnésium (C) est un composé présentant une conductivité de 250 µS/cm ou moins dans une solution aqueuse préparée en ajoutant 1 g d'hydroxyde de magnésium (C) à 100 g d'eau purifiée,
dans laquelle la conductivité est mesurée selon le procédé indiqué dans la description.

3. Composition de revêtement résistant à la corrosion selon la revendication 1 ou 2, dans laquelle l'hydroxyde de magnésium (C) présente un pH de 8 ou plus et de 12 ou moins dans une solution aqueuse préparée en ajoutant 1 g de l'hydroxyde de magnésium (C) à 100 g d'eau purifiée, dans laquelle un diamètre de particule moyen de l'hydroxyde de magnésium (C) est de 0,5 µm ou plus et de 20 µm ou moins, et dans laquelle le diamètre de particule moyen de l'hydroxyde de magnésium (C) est mesuré selon le procédé indiqué dans la description.

4. Composition de revêtement résistant à la corrosion selon l'une quelconque des revendications 1 à 3, dans laquelle
la résine de formation de film de revêtement (A) comprend au moins une sélectionnée dans le groupe constitué d'une résine uréthane et d'un produit modifié de celle-ci,
dans laquelle une température de transition vitreuse de la résine uréthane est de -50°C ou plus et de 70°C ou moins, et
dans laquelle la température de transition vitreuse est mesurée selon le procédé indiqué dans la description.

5. Composition de revêtement résistant à la corrosion selon l'une quelconque des revendications 1 à 4, dans laquelle
la résine de formation de film de revêtement (A) comprend au moins une sélectionnée dans le groupe constitué d'une résine uréthane et d'un produit modifié de celle-ci, et
dans laquelle la résine d'uréthane comprend au moins une sélectionnée dans le groupe constitué d'une résine uréthane à base d'ester, d'une résine uréthane à base d'éther et d'une résine uréthane à base de carbonate.

6. Composition de revêtement résistant à la corrosion selon l'une quelconque des revendications 1 à 5, dans laquelle un poids moléculaire moyen en nombre de la résine de formation de film de revêtement (A) est de 1 000 ou plus et de 40 000 ou moins.

7. Composition de revêtement résistant à la corrosion selon l'une quelconque des revendications 1 à 6, dans laquelle la résine formant un film de revêtement (A) comprend au moins une sélectionnée dans le groupe constitué d'une résine uréthane à base d'ester, d'une résine époxy, d'une résine de polyester et de produits modifiés de celles-ci.

8. Composition de revêtement résistant à la corrosion selon la revendication 7, dans laquelle au moins l'une de la résine uréthane à base d'ester, de la résine époxy et de la résine de polyester présente un indice d'acide solide de 30 mg KOH/g ou moins.

9. Composition de revêtement résistant à la corrosion selon l'une quelconque des revendications 1 à 8, dans laquelle une quantité de l'hydroxyde de magnésium (C) est dans la plage de 1 partie en masse ou plus et de 150 parties en masse ou moins par rapport à 100 parties en masse d'un total d'une teneur en solide de la résine de formation de film de revêtement (A) et d'une teneur en solide de l'agent de réticulation (B).

10. Procédé de production d'un film de revêtement résistant à la corrosion, comprenant :
une étape d'application en revêtement consistant à appliquer la composition de revêtement résistant à la corrosion selon l'une quelconque des revendications 1 à 9 sur un article à revêtir, et
une étape de durcissement du revêtement résistant à la corrosion à une température égale ou supérieure à 150°C et inférieure ou égale à 270°C.
